# EUROPEAN PATENT SPECIFICATION

(11) **EP 3 197 151 B1**
(45) Date of publication and mention of the grant of the patent: **14.08.2019**
(21) Application number: 14904848.0
(22) Date of filing: 28.10.2014
(51) Int. Cl.: H04N 7/08, H04N 21/8543, H04N 21/845, H04N 21/431

(54) **MOSAIC SERVICE PRESENTATION/DELIVERY METHOD AND APPARATUS**
VERFAHREN UND VORRICHTUNG ZUR MOSAIKDIENSTDARSTELLUNG/-BEREITSTELLUNG
APPAREIL ET PROCÉDÉ DE DISTRIBUTION/PRÉSENTATION DE SERVICES EN MOSAÏQUE

(43) Date of publication of application: 26.07.2017
(73) Proprietor: Huawei Technologies Co. Ltd., Shenzhen, Guangdong 518129 (CN)
(72) Inventor: TANG, Tingfang, Shenzhen Guangdong 518129 (CN); LIU, Xin, Shenzhen Guangdong 518129 (CN)
(74) Representative: Pfenning, Meinig & Partner mbB
(86) International application number: PCT/CN2014/089731
(87) International publication number: WO 2016/065540

(56) References cited:
- EP-A1- 2 793 479
- WO-A1-2014/057131
- CN-A- 101 952 852
- CN-A- 102 421 014
- US-A1- 2004 150 748
- "3rd Generation Partnership Project; Technical Specification Group Services and System Aspects; Multimedia Broadcast/Multicast Service (MBMS); Enhanced MBMS Operation (Release 12)", 3GPP DRAFT; TR26848 V1.7.0-EMO-UPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 8 August 2014 (2014-08-08), XP050839988, Retrieved from the Internet: URL:http://www.3gpp.org/ftp/tsg_sa/WG4_COD EC/TSGS4_80/Docs/ [retrieved on 2014-08-08]
- MBS SWG CHAIRMAN1: "SA4#75 MBS SWG Meeting Report", 3GPP DRAFT; S4-131108 MBS SWG REPORT PA4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG4, no. Vancouver, Canada; 20130923 - 20130927 28 September 2013 (2013-09-28), XP050727855, Retrieved from the Internet: URL:http://www.3gpp.org/ftp/tsg_sa/WG4_COD EC/TSGS4_75/Docs/ [retrieved on 2013-09-28]
- "Digital Video Broadcasting (DVB); Specification for Service Information (SI) in DVB systems;ETSI EN 300 468", ETSI DRAFT; ETSI EN 300 468, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. Broadcast, no. V1.14.1, 21 October 2013 (2013-10-21), pages 1-174, XP014196488, [retrieved on 2013-10-21]
- QUALCOMM INCORPORATED: "Draft CR TS 26.247: MPD Assembly", 3GPP DRAFT; S4-110362_MPD-ASSEMBLY-R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Sanya, China; 20110214, 17 February 2011 (2011-02-17), XP050527799, [retrieved on 2011-02-17]
- "Universal Mobile Telecommunications System (UMTS); LTE; Transparent end-to-end Packet-switched Streaming Service (PSS); Protocols and codecs (3GPP TS 26.234 version 9.3.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 4, no. V9.3.0, 1 June 2010 (2010-06-01), XP014047290,

## Description

### TECHNICAL FIELD

The present invention relates to mosaic services, and specifically, to a mosaic service presentation/delivery method and apparatus.

### BACKGROUND

A mosaic (Mosaic) service is a highly attractive service for digital televisions and Internet Protocol televisions (IPTV: Internet Protocol television). The mosaic means that a display screen is divided into multiple logical presentation cells (Cell), and the logical presentation cells display different content, for example, content on different channels.

There are two solutions for implementing mosaic: a solution based on analog synthesis, and a solution based on digital synthesis. In the analog synthesis solution, analog video sources on channels are composed by a mosaic server into one picture (an analog video) according to a spatial layout. Then the picture is encoded into a digital signal that is transferred to and played on a terminal. In the digital synthesis solution, digital bitstreams on channels are composed by a mosaic server into one digital bitstream that is then transferred to and played on a terminal.

In the foregoing solutions for implementing a mosaic service, the mosaic server needs to compose data on the channels of the mosaic service into one bitstream. Therefore, a relatively large amount of computation is caused.
EP2793479A1 provides a media content receiving method of a media content receiving device. The method includes: receiving information on a content location information file; receiving the content location information file by using the information on the content location information file; measuring a current bandwidth; requesting a first media content through a first network on the basis of the current bandwidth and the content location information file; receiving the first media content through the first network; and consuming the first media content.
"3rd Generation Partnership Project; Technical Specification Group Services and System Aspects; Multimedia Broadcast/Multicast Service (MBMS); Enhanced MBMS Operation (Release 12)", (3GPP DRAFT; TR26848 V1.7.0-EMO-UPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE) discloses associating 1 MPD with each channel, the MPD contains at least one Adaptation Set for the Thumbnail video, one Adaptation Set for the Main video, one Adaptation Set for the Audio.
"Digital Video Broadcasting (DVB); Specification for Service Information (SI) in DVB systems; ETSI EN 300 468" (ETSI DRAFT; ETSI EN 300 468, EUROPEAN TELECOMMUNICATIONS STANDARDS INSTITUTE (ETSI), 650, ROUTE DES LUCIOLES; F-06921 SOPHIA-ANTIPOLIS ; FRANCE, (20131021), vol. Broadcast, no. V1.14.1" discloses a mosaic descriptor table 69 in section 6.2.21 thereof. More specifically, the mosaic descriptor table 69 includes attributes like: nmnber_of_horizontal_elementary_cells, number_of_certical_elementary_cells, logical_cell_id, logical_cell_presentation_information, elementary_cell_field_length, etc., wherein the attribute "logical_cell_id" is a logical_cell_number associated to a group of adjacent elementary_cell_ids; the attribute "logical_cell_presentation_information" identifies the type of presentation for a logical cell, for example, a video type, a still picture type, etc.; the attribute "elementary_cell_fild_length" specifies the number of bytes following this filed up to and including the last elementary_cell_id in this logical_cell_id loop.

### SUMMARY

The present invention provides a mosaic service presentation method and apparatus according to the independent claims, to reduce an amount of computation of a mosaic server.

A first aspect of the present invention provides a mosaic service presentation method, including:
receiving a media presentation description file that describes a mosaic service, where the media presentation description file describes presentation locations of logical presentation cells of the mosaic service and mosaic media of the logical presentation cells;
obtaining the mosaic media of the logical presentation cells from an MBMS client according to a logical-presentation-cell mosaic-media description provided in the media presentation description file; and
presenting the mosaic media at the presentation locations of the logical presentation cells according to a logical-presentation-cell presentation-location description provided in the media presentation description file.

With reference to all implementation manners of the first aspect of the present invention, the mosaic media includes only a video, and the method further includes:
obtaining, from the MBMS client, mosaic audio of a highlighted logical presentation cell according to a highlighted-logical-presentation-cell mosaic-audio description provided in the media presentation description file; and
playing the mosaic audio of the highlighted logical presentation cell.

With reference to all implementation manners of the first aspect of the present invention, there are at least two logical presentation cells, the at least two logical presentation cells include a main logical presentation cell, and the method further includes:
obtaining, from the MBMS client, original media of the highlighted logical presentation cell according to a highlighted-logical-presentation-cell original-media description provided in the media presentation description file; and
presenting the original media of the highlighted logical presentation cell at a location of the main logical presentation cell according to a main-logical-presentation-cell location description provided in the media presentation description file.

With reference to all implementation manners of the first aspect of the present invention, the method further includes:
obtaining, from the MBMS client, original media of a selected logical presentation cell according to a selected-logical-presentation-cell original-media description provided in the media presentation description file; and
presenting the original media of the logical presentation cell.

A second aspect of the present invention provides a mosaic service delivery method, including:
receiving a mosaic USD that describes a mosaic service, where the mosaic USD describes mosaic media that corresponds to logical presentation cells of the mosaic service;
receiving, from a broadcast multicast server, the mosaic media that corresponds to the logical presentation cells of the mosaic service described in the mosaic USD;
receiving, from a DASH client, a mosaic-media obtaining request for obtaining mosaic media, where the mosaic-media obtaining request includes a mosaic media obtaining address described in a media presentation description file that corresponds to the mosaic service;
performing matching according to the mosaic media obtaining address to obtain a mosaic-media content identifier described in the mosaic USD; and
sending mosaic media that corresponds to the mosaic-media content identifier to the DASH client.

With reference to all implementation manners of the second aspect of the present invention, the method further includes:
receiving original-media USDs that correspond to the logical presentation cells, where the original-media USDs describe original media that corresponds to the logical presentation cells, and the original-media USDs and the logical presentation cells are in a one-to-one correspondence;
receiving, from the broadcast multicast server, the original media, described in the original USDs, of the logical presentation cells;
receiving, from the DASH client, an original-media obtaining request for obtaining original media, where the original-media obtaining request includes an original media obtaining address described in the media presentation description file;
performing matching according to the original media obtaining address to obtain an original-media identifier described in the original-media USDs; and
sending original media that corresponds to the original-media identifier to the DASH client.

A third aspect of the present invention provides a mosaic service presentation apparatus, including:
a receiving unit, configured to: receive a media presentation description file that describes a mosaic service, where the media presentation description file describes presentation locations of logical presentation cells of the mosaic service and mosaic media of the logical presentation cells, and receive the mosaic media of the logical presentation cells that is sent by an MBMS client;
a sending unit, configured to send a mosaic-media obtaining request for obtaining the mosaic media of the logical presentation cells to the MBMS client according to a logical-presentation-cell mosaic-media description provided in the media presentation description file received by the receiving unit; and
a presentation unit, configured to present the mosaic media at the presentation locations of the logical presentation cells according to a logical-presentation-cell presentation-location description provided in the media presentation description file received by the receiving unit.

With reference to all implementation manners of the third aspect of the present invention, the mosaic media received by the receiving unit includes only a video;
the sending unit is further configured to send a mosaic-audio obtaining request for obtaining mosaic audio of a highlighted logical presentation cell to the MBMS client according to a highlighted-logical-presentation-cell mosaic-audio description provided in the media presentation description file received by the receiving unit;
the receiving unit is further configured to receive the mosaic audio, sent by the MBMS client, of the highlighted logical presentation cell; and
the presentation unit is further configured to play the mosaic audio, received by the receiving unit, of the highlighted logical presentation cell.

With reference to all implementation manners of the third aspect of the present invention, there are at least two logical presentation cells, and the at least two logical presentation cells include a main logical presentation cell;
the sending unit is further configured to send an original-media obtaining request for obtaining original media of the highlighted logical presentation cell to the MBMS client according to a highlighted-logical-presentation-cell original-media description provided in the media presentation description file;
the receiving unit is further configured to receive the original media, sent by the MBMS client, of the highlighted logical presentation cell; and
the presentation unit is further configured to present the original media, received by the receiving unit, of the highlighted logical presentation cell at a location of the main logical presentation cell according to a main-logical-presentation-cell location description provided in the media presentation description file.

With reference to all implementation manners of the third aspect of the present invention, the sending unit is further configured to send an original-media obtaining request for obtaining original media of a selected logical presentation cell to the MBMS client according to a selected-logical-presentation-cell original-media description provided in the media presentation description file;
the receiving unit is further configured to receive the original media, sent by the MBMS client, of the selected logical presentation cell; and
the presentation unit is further configured to present the original media, received by the receiving unit, of the selected logical presentation cell.

A fourth aspect of the present invention provides a mosaic service delivery apparatus, including:
a receiving unit, configured to: receive a mosaic USD that describes a mosaic service, where the mosaic USD describes mosaic media that corresponds to logical presentation cells of the mosaic service; receive, from a broadcast multicast server, the mosaic media that corresponds to the logical presentation cells of the mosaic service described in the mosaic USD; and receive, from a DASH client, a mosaic-media obtaining request for obtaining mosaic media, where the mosaic-media obtaining request includes a mosaic media obtaining address described in a media presentation description file that corresponds to the mosaic service;
a matching unit, configured to perform matching according to the mosaic media obtaining address received by the receiving unit, to obtain a mosaic-media content identifier described in the mosaic USD; and
a sending unit, configured to send, to the DASH client, mosaic media that corresponds to the mosaic-media content identifier obtained by performing matching by the matching unit.

With reference to all implementation manners of the fourth aspect of the present invention, the receiving unit is further configured to: receive original-media USDs that correspond to the logical presentation cells, where the original-media USDs describe original media that corresponds to the logical presentation cells, and the original-media USDs and the logical presentation cells are in a one-to-one correspondence; receive, from the broadcast multicast server, the original media, described in the original USDs, of the logical presentation cells; and receive, from the DASH client, an original-media obtaining request for obtaining original media, where the original-media obtaining request includes an original media obtaining address described in the media presentation description file;
the matching unit is further configured to perform matching according to the original media obtaining address received by the receiving unit, to obtain an original-media identifier described in the original-media USDs; and
the sending unit is further configured to send, to the DASH client, original media that corresponds to the original-media identifier obtained by performing matching by the matching unit.

It may be learned from the foregoing technical solutions provided in embodiments of the present invention that in the embodiments of the present invention, a mosaic MPD file describes presentation locations of logical presentation cells of a mosaic service and mosaic media of the logical presentation cells. After obtaining the mosaic MPD file, a DASH client may obtain the mosaic media of the logical presentation cells according to a description in the mosaic MPD file, and present the corresponding mosaic media at the presentation locations described in the mosaic MPD file. Therefore, a mosaic server does not need to combine the mosaic media of the logical presentation cells, and an amount of computation of the mosaic server is reduced. In addition, because the presentation locations of the logical presentation cells of the mosaic service and the mosaic media of the logical presentation cells are described in the mosaic MPD file, content that needs to be presented on the logical presentation cells may be flexibly adjusted according to a requirement, and presentation flexibility of the mosaic service is also improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a mosaic service presentation method according to an embodiment of the present invention;
FIG. 2 is a schematic diagram of a mosaic service;
FIG. 3 is a flowchart of a mosaic service delivery method according to an embodiment of the present invention;
FIG. 4 is a flowchart of a mosaic service presentation method according to an embodiment of the present invention;
FIG. 5 is a flowchart of a mosaic service presentation method according to another embodiment of the present invention;
FIG. 6 is a flowchart of a mosaic service presentation method according to another embodiment of the present invention;
FIG. 7 is a structural diagram of a mosaic service presentation apparatus according to an embodiment of the present invention;
FIG. 8 is a structural diagram of a mosaic service delivery apparatus according to an embodiment of the present invention;
FIG. 9 is a structural diagram of a mosaic service presentation apparatus according to another embodiment of the present invention; and
FIG. 10 is a structural diagram of a mosaic service delivery apparatus according to another embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention describe implementation of Dynamic Adaptive Streaming over Hypertext Transfer Protocol (HTTP: Hypertext Transfer Protocol) (DASH: Dynamic Adaptive Streaming over HTTP) over a multimedia broadcast multicast service (MBMS: Multimedia Broadcast Multicast Service), and specifically describe a process of interaction between a DASH client (DASH client) and an MBMS client (MBMS client). Specifically, the MBMS client may obtain all media segments in a broadcast environment, and the DASH client may request a media segment from the MBMS client by using an HTTP interface. Both specific presentation and service logic implementation of a mosaic service are processed by the DASH client. In the present invention, the DASH client obtains an improved media presentation description (MPD: Media Presentation Description) file of the mosaic service, so that the DASH client may request a media segment from the MBMS client, present the mosaic service, and implement service logic of the mosaic service. In addition, in the present invention, the MBMS client also obtains an improved mosaic USD file, so that the MBMS client may identify a mosaic service, and send a media segment requested by the DASH client to the DASH client. The DASH client may be a mosaic service presentation terminal, for example, a personal computer, a mobile phone, a tablet computer, a television, or a set top box. The MBMS client may be any mosaic-service providing device, for example, a personal computer or a mobile phone.

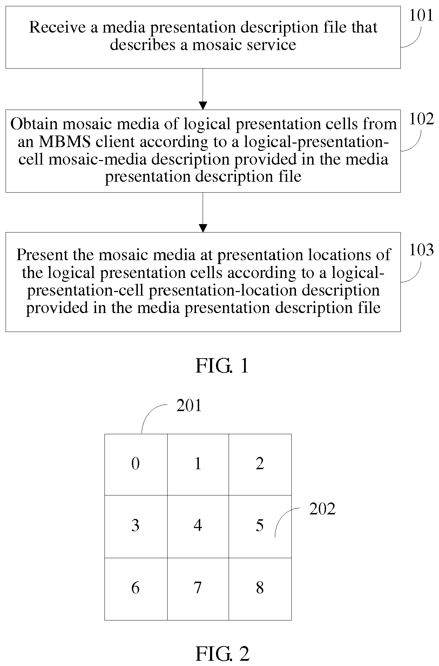

The following specifically describes the embodiments of the present invention. FIG. 1 describes a procedure of a mosaic service presentation method according to an embodiment of the present invention. In this embodiment, a processing procedure of a DASH client is described, and the method includes the following steps.

101: Receive a media presentation description file that describes a mosaic service, where the media presentation description file describes presentation locations of logical presentation cells of the mosaic service and mosaic media of the logical presentation cells.

There are at least two logical presentation cells, and each logical presentation cell has corresponding mosaic media. One logical presentation cell usually corresponds to one sub-channel of a mosaic service. That is, the logical presentation cell and the sub-channel are in a one-to-one correspondence. However, alternatively, two or more logical presentation cells may correspond to a same sub-channel. For example, when the at least two logical presentation cells include a main logical presentation cell, the main logical presentation cell and another logical presentation cell may correspond to a same sub-channel, or the main logical presentation cell may correspond to a separate sub-channel.

The DASH client may determine, according to a mosaic element/attribute in the MPD file, that the MPD describes a mosaic service. That is, a mosaic service is specified by using a mosaic element/attribute in an MPD file. For example, a mosaic descriptor (Mosaic Descriptor) may be added to an MPD file to provide a mosaic-service description in the MPD file. The mosaic descriptor may be used as an element (element) in the MPD file. It should be noted that an element/attribute in this embodiment of the present invention indicates an element or an attribute. For example, the "mosaic element/attribute" indicates a "mosaic element or mosaic attribute".

A presentation location of a logical presentation cell of the mosaic service may be described by using a logical-presentation-cell presentation-location attribute/element in the MPD file. For example, a number and a location of each logical presentation cell in the mosaic service may be agreed on in advance, and the DASH client may determine a location of a logical presentation cell as long as the logical-presentation-cell presentation-location attribute/element describes a number of the logical presentation cell. Alternatively, a quantity and numbers of elementary cells obtained by means of division according to the mosaic service may be agreed on in advance, and the logical-presentation-cell presentation-location attribute/element may describe a presentation location of a logical presentation cell by using a number of an elementary cell covered by the logical presentation cell. It may be understood that the quantity of elementary cells obtained by means of division according to the mosaic service may also be specified in the MPD file.

Mosaic media of a logical presentation cell may be described by using a mosaic-media link attribute/element in the media presentation description file. Specifically, the mosaic-media link attribute/element may describe the mosaic media of the logical presentation cell by using an identifier of an adaptive-mosaic-media set that corresponds to the mosaic media. For example, a value of the mosaic-media link attribute/element may be AdaptationSet.representation@id, or may be a list including multiple AdaptationSet.representation@id or an AdaptationSet@id. AdaptationSet is a set of adaptive-content presentation bitstreams of a same program, and may include one or more mosaic media of different bit rates that corresponds to the program. AdaptationSet.representation@id indicates an identifier of one adaptive-content presentation bitstream, and the adaptive-content presentation bitstream is mosaic media of a particular bit rate that corresponds to the program. Certainly, the mosaic-media link attribute/element may describe the mosaic media of the logical presentation cell by using a mosaic media obtaining address. The mosaic media may be a mosaic video, or a mosaic video and mosaic audio, or a mosaic text, or the like.

102: Obtain the mosaic media of the logical presentation cells from an MBMS client according to a logical-presentation-cell mosaic-media description provided in the media presentation description file.

When the mosaic-media link attribute/element describes a mosaic media obtaining address, the DASH client may add the mosaic media obtaining address to a mosaic-media obtaining request, so that a media server may determine the corresponding mosaic media according to the mosaic media obtaining address and return the corresponding mosaic media to the DASH client. The obtaining address may be specifically a segment URL. When the mosaic-media link attribute/element describes AdaptationSet. @id or a list including multiple AdaptationSet.representation@id, the DASH client may first select, according to a factor such as a hardware capability, a system setting, or a network environment, one suitable mosaic media from mosaic media of at least two different bit rates included in an adaptive-presentation-content set, and add an obtaining address of the selected mosaic media to a mosaic-media obtaining request, so that a media server may determine the corresponding mosaic media according to the mosaic media obtaining address and return the corresponding mosaic media to the DASH client. When the mosaic-media link attribute/element describes AdaptationSet.representation@id, the DASH client adds an obtaining address of a segment that corresponds to the mosaic media bitstream to a mosaic-media obtaining request, so that a media server may determine the corresponding mosaic media according to the mosaic media obtaining address and return the corresponding mosaic media to the DASH client. The mosaic media that is obtained from the media server by the DASH client may be specifically a mosaic media segment (segment).

103: Present the mosaic media at the presentation locations of the logical presentation cells according to a logical-presentation-cell presentation-location description provided in the media presentation description file.

When the logical-presentation-cell presentation-location attribute/element describes a number of the logical presentation cell, the DASH client may present the obtained mosaic media at a location that corresponds to the number of the logical presentation cell. When the logical-presentation-cell presentation-location attribute/element describes a number of an elementary cell covered by the logical presentation cell, the DASH client may present the obtained mosaic media at a location that corresponds to the number of the elementary cell. For example, elementary cells are numbered, starting from a cell in the upper left corner, in ascending order from left to right and top to bottom, and a number of the elementary cell in the upper left corner is 0. One logical presentation cell may cover one elementary cell, or may cover at least two adjacent elementary cells, and different logical presentation cells may cover different quantities of elementary cells.

It may be known from the above that in this embodiment, a mosaic MPD file describes presentation locations of logical presentation cells of a mosaic service and mosaic media of the logical presentation cells. After obtaining the mosaic MPD file, a DASH client may obtain the mosaic media of the logical presentation cells according to a description in the mosaic MPD file, and present the corresponding mosaic media at the presentation locations described in the mosaic MPD file. Therefore, a mosaic server does not need to combine the mosaic media of the logical presentation cells, and an amount of computation of the mosaic server is reduced. In addition, because the presentation locations of the logical presentation cells of the mosaic service and the mosaic media of the logical presentation cells are described in the mosaic MPD file, content that needs to be presented on the logical presentation cells may be flexibly adjusted according to a requirement, and presentation flexibility of the mosaic service is also improved.

It may be understood that the mosaic media obtained by the DASH client for the logical presentation cells in step 102 may be a video, audio, a combination of a video and audio, a text, or the like.

In one possible case, the mosaic media obtained by the DASH client for the logical presentation cells in step 102 is a combination of a video and audio, and the DASH client may directly play audio of a highlighted (highlighted) logical presentation cell of the at least two logical presentation cells. The highlighted logical presentation cell refers to a logical presentation cell selected by a user from multiple logical presentation cells that are displayed on a user interface (UI: User Interface) for mosaic service presentation. For a displaying manner, a presentation manner used by the highlighted logical presentation cell is different from that of another non-highlighted logical presentation cell, so that the highlighted logical presentation cell can be easily identified.

In another possible case, the mosaic media obtained by the DASH client for the logical presentation cells in step 102 may include only a video. In this case, to play audio of a highlighted logical presentation cell, the DASH client further needs to obtain mosaic audio of the highlighted logical presentation cell. That is, the DASH client may further perform the following steps:
obtaining, from the MBMS client, mosaic audio of a highlighted logical presentation cell according to a highlighted-logical-presentation-cell mosaic-audio description provided in the MPU file; and playing the mosaic audio of the highlighted logical presentation cell.

The mosaic audio of the highlighted logical presentation cell may be described by using a mosaic-audio link attribute/element in the MPD file. Specifically, the mosaic-audio link attribute/element may describe the mosaic audio of the logical presentation cell by using an identifier of an adaptive-mosaic-audio set that corresponds to the mosaic media. For example, a value of the mosaic-audio link attribute/element may be AdaptationSet@id. AdaptationSet@id indicates an identifier of a set of adaptive-content presentation bitstreams. The set of adaptive-content presentation bitstreams includes mosaic audio of at least two different bit rates, and the mosaic audio of at least two different bit rates corresponds to a same program. Certainly, the mosaic-audio link attribute/element may describe the mosaic audio of the logical presentation cell by using an obtaining address of the mosaic audio. For example, when mosaic audio of all logical presentation cells of the mosaic service is put in one AdaptationSet, a value of the mosaic-audio link attribute/element may be AdaptationSet.representation@id. That is, a presentation bitstream that is in the AdaptationSet and that corresponds to one logical presentation cell is directly specified, and the DASH client may obtain corresponding mosaic audio according to the AdaptationSet.representation @id.

When the mosaic-audio link attribute/element describes an obtaining address of the mosaic audio, the DASH client may add the obtaining address of the mosaic audio to a mosaic-audio obtaining request, so that the MBMS client may determine the corresponding mosaic audio according to the obtaining address of the mosaic audio and return the corresponding mosaic audio to the DASH client. When the mosaic-audio link attribute/element describes AdaptationSet@id, the DASH client may first select, according to a factor such as a hardware capability, a system setting, or a network environment, one piece of suitable mosaic audio from mosaic audio of at least two different bit rates included in a set of adaptive-content presentation bitstreams, and add an obtaining address of the selected mosaic audio to a mosaic-audio obtaining request, so that the MBMS client may determine the corresponding mosaic audio according to the obtaining address of the mosaic audio and return the corresponding mosaic audio to the DASH client. The mosaic audio that is obtained from the MBMS client by the DASH client may be specifically a mosaic audio segment (segment). It may be understood that the DASH client may obtain, from the MBMS client, only the mosaic audio that corresponds to the highlighted logical presentation cell, so as to reduce a volume of data obtained from the MBMS client. Alternatively, the DASH client may obtain the mosaic audio of all the logical presentation cells from the MBMS client, so as to avoid audio playing interruption that may occur when the user changes the highlighted logical presentation cell.

When a value of the mosaic-audio link attribute/element is AdaptationSet.representation@id, the DASH client may obtain only the mosaic audio that corresponds to the highlighted logical presentation cell.

The mosaic audio of the highlighted logical presentation cell may be described by using a mosaic-audio link attribute/element in the MPD file. Specifically, the mosaic-audio link attribute/element may describe the mosaic audio of the logical presentation cell by using an identifier of an adaptive-mosaic-audio set that corresponds to the mosaic media. For example, a value of the mosaic-audio link attribute/element may be AdaptationSet.representation@id or a list including multiple AdaptationSet.representation@id. AdaptationSet.representation@id indicates an identifier of one adaptive-content presentation bitstream. When a list including multiple AdaptationSet.representation@id is included, it indicates that audio content of the logical presentation cell includes at least two different mosaic audio bitstreams, and the at least two different mosaic audio corresponds to a same program. Certainly, the mosaic-audio link attribute/element may describe the mosaic audio of the logical presentation cell by using an obtaining address of the mosaic audio.

When the mosaic-audio link attribute/element describes an obtaining address of the mosaic audio, the DASH client may add the obtaining address of the mosaic audio to a mosaic-audio obtaining request, so that the media server may determine the corresponding mosaic audio according to the obtaining address of the mosaic audio and return the corresponding mosaic audio to the DASH client. When the mosaic-audio link attribute/element describes a list of AdaptationSet.representation@id, the DASH client may first select, according to a factor such as a hardware capability, a system setting, or a network environment, one piece of suitable mosaic audio from at least two different mosaic audio included in an adaptive-presentation-content set, and add an obtaining address of the selected mosaic audio to a mosaic-audio obtaining request, so that the media server may determine the corresponding mosaic audio according to the obtaining address of the mosaic audio and return the corresponding mosaic audio to the DASH client. When the mosaic-audio link attribute/element describes AdaptationSet.representation@id, the DASH client adds an obtaining address of the selected mosaic audio to a mosaic-audio obtaining request, so that the media server may determine the corresponding mosaic audio according to the obtaining address of the mosaic audio and return the corresponding mosaic audio to the DASH client. The mosaic audio that is obtained from the media server by the DASH client may be specifically a mosaic audio segment (segment). It may be understood that the DASH client may obtain, from the media server, only the mosaic audio that corresponds to the highlighted logical presentation cell, so as to reduce a volume of data obtained from the media server. Alternatively, the DASH client may obtain, from the media server, the mosaic audio of all the logical presentation cells, so as to avoid audio playing interruption that may occur when the user changes the highlighted logical presentation cell.

In another embodiment of the present invention, the at least two logical presentation cells of the mosaic service include a main logical presentation cell, and the main logical presentation cell needs to present original media of the highlighted logical presentation cell. The original media may be an original video, or an original video and original audio, or an original text, or the like. For example, FIG. 2 is a schematic diagram of a mosaic service. In FIG. 2, there are 9 (3 x 3) elementary cells in total, and their numbers are 0 to 8 respectively. The nine elementary cells are covered by six logical presentation cells. Five logical presentation cells each cover only one elementary cell, and the other logical presentation cell functions as a main logical presentation cell and covers four elementary cells. In FIG. 2, the five logical presentation cells other than the main logical presentation cell cover five elementary cells whose numbers are 0, 1, 2, 3, and 6, and the main logical presentation cell covers four elementary cells whose numbers are 4, 5, 7, and 8. When a logical presentation cell 201 that covers an elementary cell whose number is 0 is a highlighted logical presentation cell, a main logical presentation cell 202 that covers four elementary cells and the logical presentation cell 201 present same program content. The logical presentation cell 201 presents mosaic media, and the main logical presentation cell presents original media. It may be understood that the main logical presentation cell 202 and the highlighted logical presentation cell 201 may present different program content. For example, the main logical presentation cell may present highly recommended program content, to draw attention of a user.

To present the original media of the highlighted logical presentation cell on the main logical presentation cell, the DASH client may further execute the following procedure:
obtaining, from the MBMS client, the original media of the highlighted logical presentation cell according to a highlighted-logical-presentation-cell original-media description provided in the MPD file; and
presenting the original media of the highlighted logical presentation cell at a location of the main logical presentation cell according to a main-logical-presentation-cell location description provided in the MPD file.

The main logical presentation cell may be described by using a presentation information attribute/element in the MPD file. For example, when a value of the presentation information attribute/element is Main_video, it indicates that a corresponding logical presentation cell is a main logical presentation cell. It may be understood that the value of the presentation information attribute/element may be agreed on in advance. For example, alternatively, when the value of the presentation information attribute/element is Main, it may indicate that a corresponding logical presentation cell is a main logical presentation cell.

In this embodiment of the present invention, if the main logical presentation cell presents separate program content, a mosaic-media obtaining process of the main logical presentation cell is the same as a mosaic-media obtaining process of a non-main logical presentation cell, and details are not described again.

After a user browses the logical presentation cells of the mosaic service, if the user is relatively interested in a particular logical presentation cell, the user may choose to present the logical presentation cell. Therefore, in another embodiment of the present invention, the DASH client may further execute the following procedure:
obtaining, from the MBMS client, original media of a selected logical presentation cell according to a selected-logical-presentation-cell original-media description provided in the MPD file; and presenting the original media of the selected logical presentation cell.

The selected logical presentation cell may be presented in a full-screen presentation manner or another manner, and the mosaic service is simultaneously terminated. The original media of the logical presentation cell may be described by using an original-media attribute/element in the MPD file. Specifically, the original-media attribute/element may describe original media of a media presentation cell by using an MPD obtaining address of the original media.

In this embodiment of the present invention, the mosaic service may be specified by using the mosaic element/attribute in the MPD file. For example, as long as the MPD file includes a mosaic descriptor, the DASH client may determine that the MPD file describes a mosaic service.

In this embodiment of the present invention, the MPD file that describes the mosaic service may include at least one of the following attributes/elements:
a logical-presentation-cell quantity attribute/element used to describe a quantity of logical presentation cells;
a horizontal-elementary-cell quantity attribute/element used to describe a quantity of horizontal elementary cells;
a vertical-elementary-cell quantity attribute/element used to describe a quantity of vertical elementary cells;
a logical-presentation-cell attribute/element used to describe information about a logical presentation cell, where a quantity of logical-presentation-cell attributes/elements in the media presentation description file may be equal to a quantity of logical presentation cells; for example, when the logical presentation cells include a main logical presentation cell, a quantity of logical-presentation-cell element/attributes may be less than the quantity of logical presentation cells, and in this case, the main logical presentation cell may be described by using a separate descriptor (Descriptor); and when the logical presentation cells do not include a main logical presentation cell or include a main logical presentation cell, the quantity of logical-presentation-cell attributes/elements may be equal to the quantity of logical presentation cells;
a logical-presentation-cell identifier attribute/element used to describe an identifier of a logical presentation cell;
a logical-presentation-cell presentation-location attribute/element used to describe a presentation location of a logical presentation cell;
a presentation information attribute/element used to describe a presentation type of a logical presentation cell;
a mosaic-media link attribute/element used to describe mosaic media of a logical presentation cell;
a mosaic-audio link attribute/element used to describe mosaic audio of a logical presentation cell;
a mosaic-video link attribute/element used to describe a mosaic video of a logical presentation cell; or
an original-media attribute/element used to describe original media of a logical presentation cell.

It may be understood that attributes/elements included in the MPD file that describes the mosaic service may be adjusted and combined according to a requirement. For example, when a quantity of elementary cells is agreed on in advance, the MPD file may not include the horizontal-elementary-cell quantity attribute/element used to describe the quantity of horizontal elementary cells and the vertical-elementary-cell quantity attribute/element used to describe the quantity of vertical elementary cells. Therefore, the attributes/elements included in the MPD file may be used only as an example, and do not constitute a limitation to an attribute/element included in the MPD file. If the server obtains one composite picture by means of encoding, presentation content of all mosaic logical presentation cells is composed into one bitstream by means of encoding. In this case, the video bitstream set for a mosaic sub-channel includes only one video bitstream, and no value needs to be assigned to the mosaic-media link attribute/element or the attribute/element may not be included.

The elements/attributes included in the MPD file provided in an embodiment of the present invention may be shown in Table 1.

**Table 1**

| **Element or Attribute Name** | **Type (Attribute or Element)** | **Cardinality** | **Optionality** | **Description** |
|---|---|---|---|---|
| **MPD** | E | 1 | M | The root element that carries the media presentation description for a media presentation. |
| ... | | | | |
| **Period** | E | 1,..., N | M | Provides the information of a period. |
| Mosaic | E | 0, 1 | ..., | Describes related information of a mosaic service. |
| cellNum | A | 0, 1 | O/C | Describes a quantity of logical presentation cells. |
| helementaryCells | A | 0, 1 | O/C | Describes a quantity of horizontal elementary cells. |
| velementaryCells | A | 0, 1 | O/C | Describes a quantity of vertical elementary cells. |
| logicalCell | E | 0, N | O/C | Describes related information of a logical presentation cell. The related information includes an identifier of the logical presentation cell, an elementary cell covered by the logical presentation cell, or the like. |
| id | A | 0, 1 | O/C | Describes an identifier of a logical presentation cell. The identifier may uniquely identify the logical presentation cell. |
| elementaryCells | A | 0, N | O/C | Describes location information of a logical presentation cell, to specify a covered elementary cell. Elementary cells are numbered, starting from a cell in the upper left corner, in ascending order from left to right and top to bottom, and a number of the elementary cell in the upper left corner is 0. The logical presentation cell may include one elementary cell, or may include multiple adjacent elementary cells. |
| PresentationInfo | A | 0, 1 | M | Describes a presentation type of a logical presentation cell, that is, determine whether a current logical presentation cell is a main logical presentation cell. For example, when a value of PresentationInfo is video, mosaic media of the logical presentation cell is presented; and when the value is main_video, original media that corresponds to a highlighted logical presentation cell is presented. |
| videoRep | A | 0, 1 | O/C | Describes mosaic media of a logical presentation cell. The mosaic media may be specified by using AdaptationSet@id. When a value of PresentationInfo is main_video, a value of videoRep may be a special descriptor such as Main. |
| voiceLink | A | 0, 1 | O/C | Describes mosaic audio of a logical presentation cell. When audio and a video are stored in different representations, the mosaic audio that corresponds to the logical presentation cell may be specified by using AdaptationSet.representation @id. |
| video Link | A | 0, 1 | O/C | Describes a mosaic video of a logical presentation cell. |
| originalService | A | 0, 1 | O/C | Describes original media of a logical presentation cell. A value may be mpduri. When a user double-clicks on the logical presentation cell, a DASH client may obtain the corresponding original media by using a link indicated by mpduri. |
| ... | | | | |
| **Representation** | E | 1, ..., N | M | This element contains a description of a representation. |

In Table 1, the element Mosaic is a mosaic descriptor, and the DASH client may determine, according to the descriptor, that the MPD file describes a mosaic service. The logical-presentation-cell quantity attribute used to describe the quantity of logical presentation cells is the cellNum attribute. The horizontal-elementary-cell quantity attribute/element used to describe the quantity of horizontal elementary cells is the helementaryCells attribute. The vertical-elementary-cell quantity attribute/element used to describe the quantity of vertical elementary cells is the velementaryCells attribute. The logical-presentation-cell attribute/element used to describe information about a logical presentation cell is the logicalCell element, and the quantity of logical-presentation-cell attributes/elements in the MPD file may be equal to the quantity of logical presentation cells or may be less than the quantity of logical presentation cells. The logical-presentation-cell identifier attribute/element used to describe an identifier of a logical presentation cell is the id attribute. The logical-presentation-cell presentation-location attribute/element used to describe a presentation location of a logical presentation cell is the elementaryCells attribute. The presentation information attribute/element used to describe a presentation type of a logical presentation cell is the PresentationInfo attribute. The mosaic-media link attribute/element used to describe mosaic media of a logical presentation cell is the videoRep attribute. The mosaic-audio link attribute/element used to describe mosaic audio of a logical presentation cell is the voiceLink attribute. The mosaic-video link attribute/element used to describe a mosaic video of a logical presentation cell is the videoLink attribute. The original-media attribute/element used to describe original media of a logical presentation cell is the originalService attribute.

In this embodiment of the present invention, for a mosaic MPD file, a screen of the DASH client needs to simultaneously present mosaic videos of at least two logical presentation cells and mosaic audio of a highlighted logical presentation cell. The mosaic videos of the logical presentation cells are put in separate AdaptationSets. That is, the mosaic videos of the logical presentation cells and the AdaptationSets are in a one-to-one correspondence. A mosaic video of one logical presentation cell may include one or more representations, and the multiple representations are put in one AdaptationSet. In addition, Mosaic audio of the logical presentation cells may be put in separate AdaptationSets. That is, the mosaic audio of the logical presentation cell and the AdaptationSets are in a one-to-one correspondence. Certainly, mosaic audio of all logical presentation cells of the mosaic service may be put in one AdaptationSet, and in this case, all the mosaic audio corresponds to a same AdaptationSet. In this case, the mosaic MPD file may describe mosaic audio of a corresponding logical presentation cell by using AdaptationSet.representation @id.

If a user needs to dispose a relatively large logical presentation cell on a screen to present original media that corresponds to a highlighted sub-channel cell, the logical presentation cell is referred to as a main logical presentation cell. In this case, representations, satisfying a playing condition, of original media that corresponds to logical presentation cells, may be gathered in a separate AdaptationSet. A specified identifier, for example, "main" may be used as an ID of the main logical presentation cell. Audio presented on the main logical presentation cell corresponds to audio of the highlighted logical presentation cell, and may be specified by using a voiceLink attribute of the highlighted logical presentation cell. A video presented on the main logical presentation cell corresponds to an original video of the highlighted logical presentation cell, and may be specified by using videoLink of the highlighted logical presentation cell.

A mosaic MPD file may describe original media of a logical presentation cell in two implementation manners. Original media that is described in a same MPD as an MPD of the logical presentation cell may be described by using a videoLink attribute in the mosaic MPD file, and original media that is described in an MPD different from an MPD of the logical presentation cell may be described by using an originalService attribute in the mosaic MPD file.

When the mosaic MPD file does not describe the original media that corresponds to the logical presentation cell, the videoLink attribute may not be used. It may be understood that the videoLink attribute and the originalService attribute in the mosaic MPD file may be combined. Specifically, whether to combine the videoLink attribute and the originalService attribute depends on a specific implementation.

The videoLink attribute may also be used to describe other video media associated with a logical presentation cell.

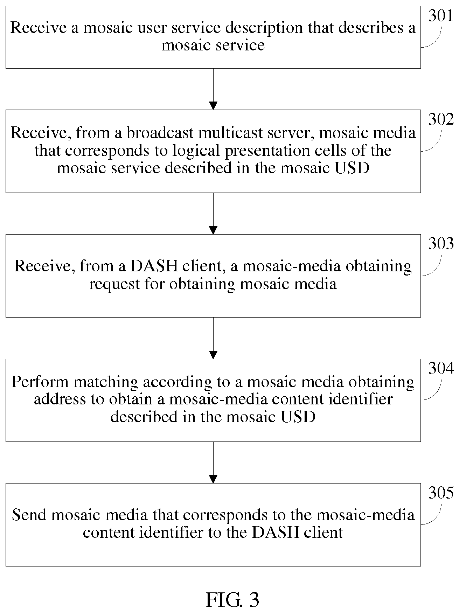

FIG. 3 shows a procedure of a mosaic service delivery method according to an embodiment of the present invention. In this embodiment, a processing procedure of an MBMS client is described and includes the following steps.

301: Receive a mosaic user service description (USD: User Service Description) that describes a mosaic service, where the mosaic USD describes mosaic media that corresponds to logical presentation cells of the mosaic service.

The mosaic USD may include a description of mosaic media that correspond to each logical presentation cell. For example, in an embodiment of the present invention, the mosaic USD may include a deliveryMethod element, and the element includes one or more r12:broadcastAppService instances. One r12:broadcastAppService instance indicates one broadcast stream representation (representation), and one r12:broadcastAppService instance corresponds to one logical presentation cell. Alternatively, the element may include one or more r12:unicastAppService instances. One r12:unicastAppService instance indicates one unicast stream representation (representation), and one r12:unicastAppService instance corresponds to one logical presentation cell.

The mosaic service may be specified by using a mosaic service indicator in the mosaic USD. For example, in an embodiment of the present invention, the mosaic USD includes a userServiceDescription element, and a value of a serviceclass attribute of the element may be mosaic, to indicate that the USD is a mosaic USD that describes a mosaic service.

302: Receive, from a broadcast multicast server (BM-SC), the mosaic media that corresponds to the logical presentation cells of the mosaic service described in the mosaic USD.

The MBMS client may passively receive the mosaic media that corresponds to the logical presentation cells of the mosaic service, or may actively obtain, according to the mosaic USD, the mosaic media that corresponds to the logical presentation cells of the mosaic service.

303: Receive, from a DASH client, a mosaic-media obtaining request for obtaining mosaic media, where the mosaic-media obtaining request includes a mosaic media obtaining address described in an MPD file that corresponds to the mosaic service.

The mosaic media may be specifically a mosaic video, or mosaic audio, or a mosaic video and mosaic audio, or a mosaic text, or the like. The mosaic media obtaining address may be specifically a segment URL.

304: Perform matching according to the mosaic media obtaining address to obtain a mosaic-media content identifier described in the mosaic USD.

The MBMS client may specifically perform matching according to the segment URL to obtain the mosaic-media content identifier described in the mosaic USD. For example, in an embodiment of the present invention, the MBMS client may perform matching according to a segment URL to obtain a basePattern attribute in an r12:broadcastAppService instance or an r12:unicastAppService instance, so as to determine corresponding mosaic media according to the basePattern attribute.

305: Send mosaic media that corresponds to the mosaic-media content identifier to the DASH client.

It may be known from the above that in this embodiment, a mosaic USD file describes mosaic media of logical presentation cells of a mosaic service. After receiving a mosaic-media obtaining request from a DASH client, an MBMS client may perform matching according to the mosaic USD file to obtain mosaic media, requested by the DASH client, of a logical presentation cell. Therefore, a mosaic server does not need to combine the mosaic media of the logical presentation cells, and an amount of computation of the mosaic server is reduced. In addition, because the mosaic media of the logical presentation cells of the mosaic service is described in the mosaic USD, content that needs to be presented on the logical presentation cells may be flexibly adjusted according to a requirement, and presentation flexibility of the mosaic service is also improved.

In another embodiment of the present invention, the MBMS client may further perform the following procedure:
receiving original-media USDs that correspond to the logical presentation cells, where the original-media USDs describe original media that corresponds to the logical presentation cells, and the original-media USDs and the logical presentation cells are in a one-to-one correspondence, where the original media may be specifically an original video, or original audio, or an original video and original audio, or an original text, or the like, and an original media obtaining address may be specifically a segment URL;
receiving, from the broadcast multicast server, the original media, described in the original-media USDs, of the logical presentation cells;
receiving, from the DASH client, an original-media obtaining request for obtaining original media, where the original-media obtaining request includes an original media obtaining address described in the MPD file;
specifically, performing matching according to the original media obtaining address to obtain an original-media identifier described in the original-media USDs, where the MBMS client may specifically perform matching according to the segment URL to obtain an original-media content identifier described in the original-media USDs, for example, in an embodiment of the present invention, the MBMS client may perform matching according to a segment URL to obtain a basePattern attribute in an r12:broadcastAppService instance or an r12:unicastAppService instance, so as to determine corresponding original media according to the basePattern attribute; and
sending original media that corresponds to the original-media identifier to the DASH client.

In an embodiment of the present invention, the original-media USDs and the mosaic USD may belong to a same USD bundle. It may be understood that the original-media USDs and the mosaic USD may belong to different USD bundles.

In this embodiment of the present invention, the DASH client obtains the mosaic USD from the MBMS client. In an implementation manner, the mosaic USD includes an identifier of a corresponding mosaic MPD file. The MBMS client may obtain the corresponding mosaic MPD file according to the identifier of the mosaic MPD file, and send the obtained mosaic MPD file to the DASH client. In another implementation manner, the mosaic USD may include a mediaPresentationDescription element, and the element may include a reference to a Media Presentation Description metadata fragment whose data structure is the same as a data structure of the MPD file. That is, the data structure of the Media Presentation Description metadata fragment may be the same as a data structure of a corresponding mosaic MPD file. That is, the mosaic USD may include all elements/attributes of the corresponding mosaic MPD file. In this case, the MBMS client may directly generate the corresponding mosaic MPD file according to the mediaPresentationDescription element/attribute in the mosaic USD, and send the generated mosaic MPD file to the DASH client. It may be understood that the DASH client may actively request the mosaic MPD file from the MBMS client, and the MBMS client obtains or generates the mosaic MPD file only after receiving the request from the DASH client. Certainly, the MBMS client may actively generate or obtain the mosaic MPD file, and send the mosaic MPD file immediately after receiving the request from the DASH client. The DASH client may passively receive the mosaic MPD file sent by the MBMS client.

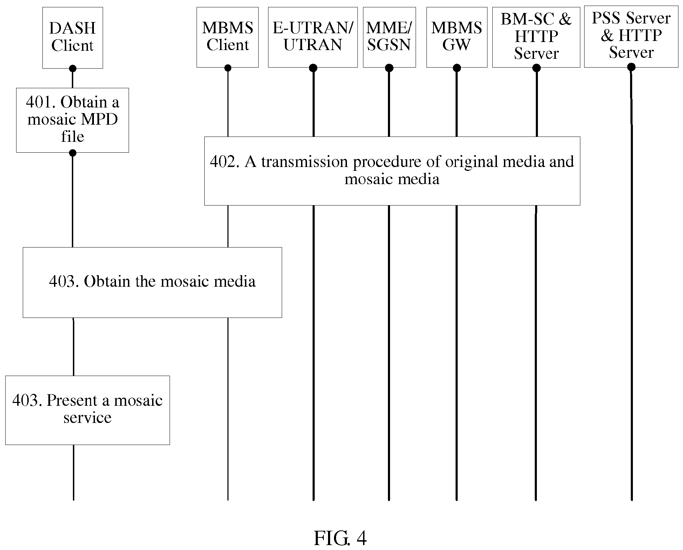

FIG. 4 shows a procedure of a mosaic service presentation method according to an embodiment of the present invention. In this embodiment, a case in which mosaic audio and a mosaic video are stored in a same representation is described. As shown in FIG. 4, the embodiment includes the following steps.

401. A DASH client obtains a mosaic MPD file. Parameters included in the mosaic MPD file may be shown in Table 2. When a value of PresentationInfo of each logicalCell is "video", it indicates that no main logical presentation cell exists.

**Table 2**

| **Element or Attribute Name** | **Type (Attribute or Element)** | **Cardinality** |
|---|---|---|
| **MPD** | E | 1 |
| ... | | |
| **Period** | E | 1,..., N |
| Mosaic | E | 0, 1 |
| cellNum | A | 0, 1 |
| helementaryCells | A | 0, 1 |
| velementaryCells | A | 0, 1 |
| logicalCell | E | 0, N |
| id | A | 0, 1 |
| elementaryCells | A | 0, N |
| PresentationInfo | A | 0, 1 |
| videoRep | A | 0, 1 |
| originalService | A | 0, 1 |
| ... | | |
| **Representation** | E | 1,..., N |

In Table 2, a quantity of logical presentation cells that can be presented and presentation locations of the logical presentation cells are described, and a presentation type, a mosaic video, mosaic audio, and original media of each logical presentation cell are further described.

402: A transmission procedure of original media and mosaic media. In the procedure, original media and mosaic media that are described in all r12:broadcastAppService instances of a deliveryMethod element in a USD bundle (including an original-media USD and a mosaic USD) received by an MBMS client are transmitted to the MBMS client. DASH segments of the original media and the mosaic media may be transmitted to the MBMS client as FLUTE Objects.

In the procedure, related network elements include the MBMS client, an E-UTRAN/UTRAN, an MME/SGSN, an MBMS GW, and a BM-SC&HTTP Server. For a specific process, refer to an existing procedure. Details are not described in this embodiment of the present invention.

403: Obtain the mosaic media. The DASH client obtains, from the MBMS client according to description information in the mosaic MPD, the mosaic media required by a mosaic service. The mosaic media may be specifically transmitted from the MBMS client to the DASH client as a DASH segment.

404: Present a mosaic service. The DASH client may present the corresponding mosaic media at the presentation locations of the logical presentation cells according to a description in the mosaic MPD file. When the DASH client presents the mosaic service, a logical presentation cell in the upper left corner is considered as a highlighted logical presentation cell by default.

It may be known from the above that in this embodiment, a mosaic MPD file describes presentation locations of logical presentation cells of a mosaic service and mosaic media of the logical presentation cells. After obtaining the mosaic MPD file, a DASH client may obtain the mosaic media of the logical presentation cells according to a description in the mosaic MPD file, and present the corresponding mosaic media at the presentation locations described in the mosaic MPD file. Therefore, a mosaic server does not need to combine the mosaic media of the logical presentation cells, and an amount of computation of the mosaic server is reduced. In addition, because the presentation locations of the logical presentation cells of the mosaic service and the mosaic media of the logical presentation cells are described in the mosaic MPD file, content that needs to be presented on the logical presentation cells may be flexibly adjusted according to a requirement, and presentation flexibility of the mosaic service is also improved.

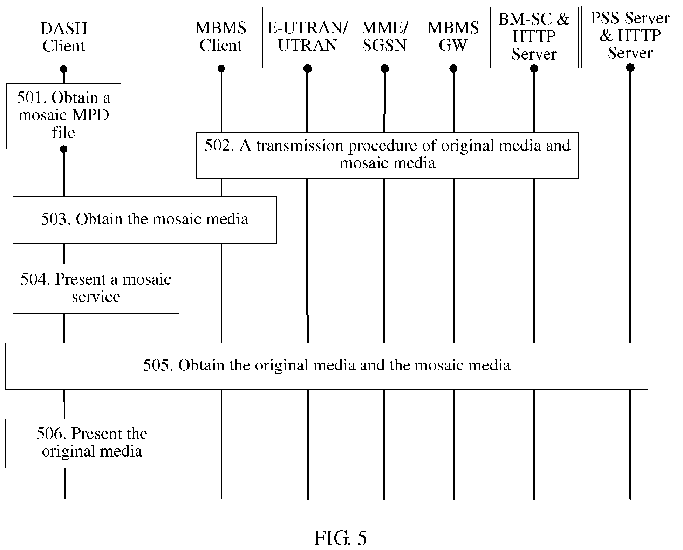

FIG. 5 shows a procedure of a mosaic service presentation method according to an embodiment of the present invention. In this embodiment, a case in which mosaic audio and a mosaic video are stored in different representations is described. As shown in FIG. 5, the embodiment includes the following steps.

501. A DASH client obtains a mosaic MPD file. Parameters included in the mosaic MPD file may be shown in Table 3. When a value of PresentationInfo of each logicalCell is "video", it indicates that no main logical presentation cell exists.

**Table 3**

| **Element or Attribute Name** | **Type (Attribute or Element)** | **Cardinality** |
|---|---|---|
| **MPD** | E | 1 |
| ... | | |
| **Period** | E | 1,..., N |
| Mosaic | E | 0, 1 |
| cellNum | A | 0, 1 |
| helementaryCells | A | 0, 1 |
| velementaryCells | A | 0, 1 |
| logicalCell | E | 0, N |
| id | A | 0, 1 |
| elementaryCells | A | 0, N |
| PresentationInfo | A | 0, 1 |
| videoRep | A | 0, 1 |
| voiceLink | A | 0, 1 |
| originalService | A | 0, 1 |
| ..., | | |
| **Representation** | E | 1, ...,N |

As shown in Table 3, a value of the videoRep element is a video representation that corresponds to a logical presentation cell, mosaic audio that corresponds to the logical presentation cell is described by using the voiceLink attribute, and original media that corresponds to the logical presentation cell is described by using the originalService attribute.

502: A transmission procedure of original media and mosaic media. In the procedure, an MBMS client receives original media and mosaic media that are described in all r12:broadcastAppService instances of a deliveryMethod element in a USD bundle (including an original-media USD and a mosaic USD) and that are transmitted to the MBMS client. DASH segments of the original media and the mosaic media may be transmitted to the MBMS client as FLUTE Objects.

In the procedure, related network elements include the MBMS client, an E-UTRAN/UTRAN, an MME/SGSN, an MBMS GW, and a BM-SC&HTTP Server. For a specific process, refer to an existing procedure. Details are not described in this embodiment of the present invention.

503: Obtain the mosaic media. The DASH client obtains, from the MBMS client according to description information in the mosaic MPD file, the mosaic media required by a mosaic service. The mosaic media may be specifically transmitted from the MBMS client to the DASH client as a DASH segment.

504: Present a mosaic service. During presentation, a user may switch the highlighted logical presentation cell. The DASH client requests mosaic media of media presentation cells, and obtains mosaic audio of the highlighted logical presentation cell according to a highlighted-logical-presentation-cell mosaic-audio description provided in the mosaic MPD file. During presentation, the mosaic audio of the highlighted logical presentation cell is always played.

505: Obtain the original media and the mosaic media. The MBMS client stops obtaining mosaic media of a mosaic service after leaving a broadcast environment. In this case, the DASH client obtains the mosaic media and the original media directly from the MBMS client.

Specifically, the MBMS client may inform the DASH client of a change in a current network transmission manner, and the DASH client directly obtains, according to descriptions in the mosaic MPD file and an original-media MPD, the mosaic media and the original media from a unicast MBMS client (PSS Server & HTTP Server). Certainly, the MBMS client may not inform the DASH client of a change in a current network transmission manner, and redirect a received mosaic-media obtaining request and a received original-media obtaining request to the unicast MBMS client in a subsequent process.

506: Present the original media. The user selects a logical presentation cell. The DASH client requests an original-media MPD from the MBMS client according to an original-media attribute description in description information of the logical presentation cell in the mosaic MPD file, obtains original media from the MBMS client according to a description in the original-media MPD, and presents the original media.

It may be known from the above that in this embodiment, a mosaic MPD file describes presentation locations of logical presentation cells of a mosaic service and mosaic media of the logical presentation cells. After obtaining the mosaic MPD file, a DASH client may obtain the mosaic media of the logical presentation cells according to a description in the mosaic MPD file, and present the corresponding mosaic media at the presentation locations described in the mosaic MPD file. Therefore, a mosaic server does not need to combine the mosaic media of the logical presentation cells, and an amount of computation of the mosaic server is reduced. In addition, because the presentation locations of the logical presentation cells of the mosaic service and the mosaic media of the logical presentation cells are described in the mosaic MPD file, content that needs to be presented on the logical presentation cells may be flexibly adjusted according to a requirement, and presentation flexibility of the mosaic service is also improved.

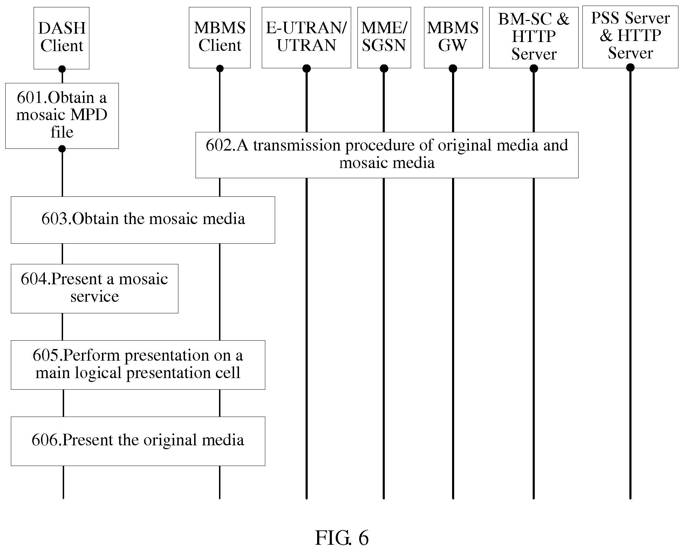

FIG. 6 shows a procedure of a mosaic service presentation method according to an embodiment of the present invention. In this embodiment, a case in which mosaic audio and a mosaic video are stored in different representations is described. As shown in FIG. 6, the embodiment includes the following steps.

601. A DASH client obtains a mosaic MPD file. Parameters included in the mosaic MPD file may be shown in Table 4.

**Table 4**

| **Element or Attribute Name** | **Type (Attribute or Element)** | **Cardinality** |
|---|---|---|
| **MPD** | E | 1 |
| ... | | |
| **Period** | E | 1,..., N |
| Mosaic | E | 0, 1 |
| cellNum | A | 0, 1 |
| helementaryCells | A | 0, 1 |
| velementaryCells | A | 0, 1 |
| logicalCell | E | 0, N |
| id | A | 0, 1 |
| elementaryCells | A | 0, N |
| PresentationInfo | A | 0, 1 |
| videoRep | A | 0, 1 |
| voice Link | A | 0, 1 |
| video Link | A | 0, 1 |
| originalService | A | 0, 1 |
| ..., | | |
| **Representation** | E | 1, ..., N |

For each logical presentation cell, a value of the PresentationInfo attribute of the logicalCell attribute is video. A value of the videoRep attribute is a mosaic video representation presented on a logical presentation cell, and a value of the voiceLink attribute is mosaic audio that corresponds to a logical presentation cell. Mosaic audio of a logical presentation cell is played when only the logical presentation cell is a highlighted logical presentation cell. The videoLink attribute is an original-media representation of a logical presentation cell. When a logical presentation cell is a highlighted logical presentation cell, a main logical presentation cell presents original media of the highlighted logical presentation cell.

For a main logical presentation cell, a value of the PresentationInfo attribute of the logicalCell attribute is main_video, and a value of the videoRep attribute may be a preset special identifier such as Main. The main logical presentation cell presents original media of a current highlighted logical presentation cell, and elements of the main logical presentation cell may not include the voiceLink attribute and the videoLink attribute.

602: A transmission procedure of original media and mosaic media. In the procedure, an MBMS client receives original media and mosaic media that are described in all r12:broadcastAppService instances of a deliveryMethod element in a USD bundle (including an original-media USD and a mosaic USD) and that are transmitted to the MBMS client. DASH segments of the original media and the mosaic media may be transmitted to the MBMS client as FLUTE Objects.

In the procedure, related network elements include the MBMS client, an E-UTRAN/UTRAN, an MME/SGSN, an MBMS GW, and a BM-SC&HTTP Server. For a specific process, refer to an existing procedure. Details are not described in this embodiment of the present invention.

603: Obtain the mosaic media. The DASH client obtains, from the MBMS client according to description information in the mosaic MPD file, the mosaic media required by a mosaic service. The mosaic media may be specifically transmitted from the MBMS client to the DASH client as a DASH segment.

604: Present a mosaic service. During presentation, a user may switch the highlighted logical presentation cell. The DASH client requests mosaic media of media presentation cells, and obtains mosaic audio of the highlighted logical presentation cell according to a highlighted-logical-presentation-cell mosaic-audio description provided in the mosaic MPD file. During presentation, the mosaic audio of the highlighted logical presentation cell is always played.

605: Perform presentation on a main logical presentation cell. The DASH client obtains original media of the highlighted logical presentation cell according to a description in the mosaic MPD file, and presents the original media of the highlighted logical presentation cell at a presentation location of the main logical presentation cell.

It may be understood that step 604 and step 605 are not necessarily performed in a particular order, and may be performed simultaneously.

606: Present the original media. The user selects a logical presentation cell. The DASH client requests an original-media MPD from the MBMS client according to an original-media attribute description in description information of the logical presentation cell in the mosaic MPD file, obtains original media from the MBMS client according to a description in the original-media MPD, and presents the original media.

It may be known from the above that in this embodiment, a mosaic MPD file describes presentation locations of logical presentation cells of a mosaic service and mosaic media of the logical presentation cells. After obtaining the mosaic MPD file, a DASH client may obtain the mosaic media of the logical presentation cells according to a description in the mosaic MPD file, and present the corresponding mosaic media at the presentation locations described in the mosaic MPD file. Therefore, a mosaic server does not need to combine the mosaic media of the logical presentation cells, and an amount of computation of the mosaic server is reduced. In addition, because the presentation locations of the logical presentation cells of the mosaic service and the mosaic media of the logical presentation cells are described in the mosaic MPD file, content that needs to be presented on the logical presentation cells may be flexibly adjusted according to a requirement, and presentation flexibility of the mosaic service is also improved.

It should be noted that for brief description, the foregoing method embodiments are represented as a series of actions. However, a person skilled in the art should appreciate that the present invention is not limited to the described order of the actions, because according to the present invention, some steps may be performed in other orders or simultaneously. In addition, a person skilled in the art should also appreciate that all the embodiments described in the specification are embodiments, and the related actions and modules are not necessarily mandatory to the present invention.

The following further describes a mosaic service presentation apparatus and a mosaic service delivery apparatus that are provided in the embodiments of the present invention. The mosaic service presentation apparatus may be a DASH client. The mosaic service presentation apparatus may be specifically a device that may act as a DASH client, for example, a personal computer, a mobile phone, a tablet computer, a television, or a set top box. The mosaic service delivery device may be an MBMS client. The mosaic service delivery device may be specifically any mosaic service providing device, for example, a personal computer, a mobile phone, or a tablet computer.

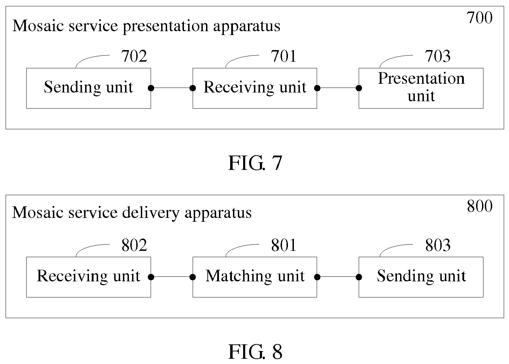

FIG. 7 shows a structure of a mosaic service presentation apparatus 700 according to an embodiment of the present invention. As shown in FIG. 7, the mosaic service presentation apparatus 700 includes: a receiving unit 701, a sending unit 702, and a presentation unit 703.

The receiving unit 701 is configured to: receive a media presentation description file that describes a mosaic service, where the media presentation description file describes presentation locations of logical presentation cells of the mosaic service and mosaic media of the logical presentation cells, and receive the mosaic media of the logical presentation cells that is sent by an MBMS client.

There are at least two logical presentation cells, and each logical presentation cell has corresponding mosaic media. One logical presentation cell usually corresponds to one sub-channel of a mosaic service. That is, the logical presentation cell and the sub-channel are in a one-to-one correspondence. However, alternatively, two or more logical presentation cells may correspond to a same sub-channel. For example, when the at least two logical presentation cells include a main logical presentation cell, the main logical presentation cell and another logical presentation cell may correspond to a same sub-channel.

The mosaic service presentation apparatus may determine, according to a mosaic element/attribute in the MPD file, that the MPD describes a mosaic service. That is, a mosaic service is specified by using a mosaic element/attribute in an MPD file. For example, a mosaic descriptor (Mosaic Descriptor) may be added to an MPD file to provide a mosaic-service description in the MPD file. The mosaic descriptor may be used as an element (element) in the MPD file. It should be noted that an element/attribute in this embodiment of the present invention indicates an element or an attribute. For example, the "mosaic element/attribute" indicates a "mosaic element or mosaic attribute".

A presentation location of a logical presentation cell of the mosaic service may be described by using a logical-presentation-cell presentation-location attribute/element in the MPD file. For example, a number and a location of each logical presentation cell in the mosaic service may be agreed on in advance, and the presentation unit 703 may determine a location of a logical presentation cell, as long as the logical-presentation-cell presentation-location attribute/element describes a number of the logical presentation cell. Alternatively, a quantity and numbers of elementary cells obtained by means of division according to the mosaic service may be agreed on in advance, and the logical-presentation-cell presentation-location attribute/element may describe a presentation location of a logical presentation cell by using a number of an elementary cell covered by the logical presentation cell. It may be understood that the quantity of elementary cells obtained by means of division according to the mosaic service may also be specified in the MPD file.

Mosaic media of a logical presentation cell may be described by using a mosaic-media link attribute/element in the media presentation description file. Specifically, the mosaic-media link attribute/element may describe the mosaic media of the logical presentation cell by using an identifier of an adaptive-mosaic-media set that corresponds to the mosaic media. For example, a value of the mosaic-media link attribute/element may be AdaptationSet.representation@id, or may be a list including multiple AdaptationSet.representation@id or an AdaptationSet@id. AdaptationSet is a set of adaptive-content presentation bitstreams of a same program, and may include one or more mosaic media of different bit rates that corresponds to the program. AdaptationSet.representation@id indicates an identifier of one adaptive-content presentation bitstream, and the adaptive-content presentation bitstream is mosaic media of a particular bit rate that corresponds to the program. Certainly, the mosaic-media link attribute/element may describe the mosaic media of the logical presentation cell by using a mosaic media obtaining address. The mosaic media may be a mosaic video, or a mosaic video and mosaic audio, or a mosaic text, or the like.

The sending unit 702 is configured to send a mosaic-media obtaining request for obtaining the mosaic media of the logical presentation cells to the MBMS client according to a logical-presentation-cell mosaic-media description provided in the media presentation description file received by the receiving unit 701.

When the mosaic-media link attribute/element describes a mosaic media obtaining address, the DASH client may add the mosaic media obtaining address to a mosaic-media obtaining request, so that a media server may determine the corresponding mosaic media according to the mosaic media obtaining address and return the corresponding mosaic media to the DASH client. The obtaining address may be specifically a segment URL. When the mosaic-media link attribute/element describes AdaptationSet. @id or a list including multiple AdaptationSet.representation@id, the DASH client may first select, according to a factor such as a hardware capability, a system setting, or a network environment, one suitable mosaic media from mosaic media of at least two different bit rates included in an adaptive-presentation-content set, and add an obtaining address of the selected mosaic media to a mosaic-media obtaining request, so that a media server may determine the corresponding mosaic media according to the mosaic media obtaining address and return the corresponding mosaic media to the DASH client. When the mosaic-media link attribute/element describes AdaptationSet.representation@id, the DASH client adds an obtaining address of a segment that corresponds to the mosaic media bitstream to a mosaic-media obtaining request, so that a media server may determine the corresponding mosaic media according to the mosaic media obtaining address and return the corresponding mosaic media to the DASH client. The mosaic media that is obtained from the media server by the DASH client may be specifically a mosaic media segment (segment).

The presentation unit 703 is configured to present the mosaic media, received by the receiving unit 701, at the presentation locations of the logical presentation cells according to a logical-presentation-cell presentation-location description provided in the media presentation description file received by the receiving unit 701.

When the logical-presentation-cell presentation-location attribute/element describes a number of the logical presentation cell, the presentation unit 703 may present the obtained mosaic media at a location that corresponds to the number of the logical presentation cell. When the logical-presentation-cell presentation-location attribute/element describes a number of an elementary cell covered by the logical presentation cell, the presentation unit 703 may present the obtained mosaic media at a location that corresponds to the number of the elementary cell. For example, elementary cells are numbered, starting from a cell in the upper left corner, in ascending order from left to right and top to bottom, and a number of the elementary cell in the upper left corner is 0. One logical presentation cell may cover one elementary cell, or may cover at least two adjacent elementary cells, and different logical presentation cells may cover different quantities of elementary cells.

It may be known from the above that in this embodiment, a mosaic MPD file describes presentation locations of logical presentation cells of a mosaic service and mosaic media of the logical presentation cells. After obtaining the mosaic MPD file, a DASH client may obtain the mosaic media of the logical presentation cells according to a description in the mosaic MPD file, and present the corresponding mosaic media at the presentation locations described in the mosaic MPD file. Therefore, a mosaic server does not need to combine the mosaic media of the logical presentation cells, and an amount of computation of the mosaic server is reduced. In addition, because the presentation locations of the logical presentation cells of the mosaic service and the mosaic media of the logical presentation cells are described in the mosaic MPD file, content that needs to be presented on the logical presentation cells may be flexibly adjusted according to a requirement, and presentation flexibility of the mosaic service is also improved.

It may be understood that the mosaic media of the logical presentation cell that is received by the receiving unit 701 may be a video, audio, a combination of a video and audio, a text, or the like.

In one possible case, the mosaic media of the logical presentation cell that is received by the receiving unit 701 is a combination of a video and audio, and the presentation unit 703 may directly play audio of a highlighted (highlighted) logical presentation cell of the at least two logical presentation cells. The highlighted logical presentation cell refers to a logical presentation cell selected by a user from multiple logical presentation cells that are displayed on a user interface for mosaic service presentation. For a displaying manner, a presentation manner used by the highlighted logical presentation cell is different from that of another non-highlighted logical presentation cell, so that the highlighted logical presentation cell can be easily identified.

In another possible case, the mosaic media of the logical presentation cell that is received by the receiving unit 701 may include only a video. In this case, to play audio of a highlighted logical presentation cell, the sending unit 702 may be further configured to send a mosaic-audio obtaining request for obtaining mosaic audio of the highlighted logical presentation cell to the MBMS client according to a highlighted-logical-presentation-cell mosaic-audio description provided in the media presentation description file received by the receiving unit 701. The receiving unit 701 is further configured to receive the mosaic audio, sent by the MBMS client, of the highlighted logical presentation cell. The presentation unit 703 is further configured to play the mosaic audio, received by the receiving unit 701, of the highlighted logical presentation cell.

The mosaic audio of the highlighted logical presentation cell may be described by using a mosaic-audio link attribute/element in the MPD file. Specifically, the mosaic-audio link attribute/element may describe the mosaic audio of the logical presentation cell by using an identifier of an adaptive-mosaic-audio set that corresponds to the mosaic media. For example, a value of the mosaic-audio link attribute/element may be an AdaptationSet.representation@id. The AdaptationSet.representation@id indicates an identifier of one presentation bitstream in a set of adaptive-content presentation bitstreams. The set of adaptive-content presentation bitstreams includes mosaic audio of at least two different bit rates, and the mosaic audio of at least two different bit rates corresponds to a same program or different programs. Certainly, the mosaic-audio link attribute/element may describe the mosaic audio of the logical presentation cell by using an obtaining address of the mosaic audio. For example, when mosaic audio of all logical presentation cells of the mosaic service is put in one AdaptationSet, a value of the mosaic-audio link attribute/element may be AdaptationSet.representation@id. That is, a presentation bitstream that is in the AdaptationSet and that corresponds to one logical presentation cell is directly specified, and the DASH client may obtain corresponding mosaic audio according to the AdaptationSet.representation @id.

When the mosaic-audio link attribute/element describes an obtaining address of the mosaic audio, the sending unit 702 may add the obtaining address of the mosaic audio to a mosaic-audio obtaining request, so that the MBMS client may determine the corresponding mosaic audio according to the obtaining address of the mosaic audio and return the corresponding mosaic audio to the mosaic service presentation apparatus. When the mosaic-audio link attribute/element describes AdaptationSet@id, the mosaic service presentation apparatus may first select, according to a factor such as a hardware capability, a system setting, or a network environment, one piece of suitable mosaic audio from mosaic audio of at least two different bit rates included in a set of adaptive-content presentation bitstreams, and add an obtaining address of the selected mosaic audio to a mosaic-audio obtaining request, so that the MBMS client may determine the corresponding mosaic audio according to the obtaining address of the mosaic audio and return the corresponding mosaic audio to the mosaic service presentation apparatus. The mosaic audio received by the receiving unit 701 may be specifically a mosaic audio segment (segment). It may be understood that the mosaic service presentation apparatus may obtain, from the MBMS client, only the mosaic audio that corresponds to the highlighted logical presentation cell, so as to reduce a volume of data obtained from the MBMS client. Alternatively, the mosaic service presentation apparatus may obtain, from the MBMS client, the mosaic audio of all the logical presentation cells, so as to avoid audio playing interruption that may occur when the user changes the highlighted logical presentation cell.

When a value of the mosaic-audio link attribute/element is AdaptationSet.representation@id, the DASH client may obtain only the mosaic audio that corresponds to the highlighted logical presentation cell.

The mosaic audio of the highlighted logical presentation cell may be described by using a mosaic-audio link attribute/element in the MPD file. Specifically, the mosaic-audio link attribute/element may describe the mosaic audio of the logical presentation cell by using an identifier of an adaptive-mosaic-audio set that corresponds to the mosaic media. For example, a value of the mosaic-audio link attribute/element may be AdaptationSet.representation@id or a list including multiple AdaptationSet.representation@id. AdaptationSet.representation@id indicates an identifier of one adaptive-content presentation bitstream. When a list including multiple AdaptationSet.representation@id is included, it indicates that audio content of the logical presentation cell includes at least two different mosaic audio bitstreams, and the at least two different mosaic audio corresponds to a same program. Certainly, the mosaic-audio link attribute/element may describe the mosaic audio of the logical presentation cell by using an obtaining address of the mosaic audio.

When the mosaic-audio link attribute/element describes an obtaining address of the mosaic audio, the DASH client may add the obtaining address of the mosaic audio to a mosaic-audio obtaining request, so that the media server may determine the corresponding mosaic audio according to the obtaining address of the mosaic audio and return the corresponding mosaic audio to the DASH client. When the mosaic-audio link attribute/element describes a list of AdaptationSet.representation@id, the DASH client may first select, according to a factor such as a hardware capability, a system setting, or a network environment, one piece of suitable mosaic audio from at least two different mosaic audio included in an adaptive-presentation-content set, and add an obtaining address of the selected mosaic audio to a mosaic-audio obtaining request, so that the media server may determine the corresponding mosaic audio according to the obtaining address of the mosaic audio and return the corresponding mosaic audio to the DASH client. When the mosaic-audio link attribute/element describes AdaptationSet.representation@id, the DASH client adds an obtaining address of the selected mosaic audio to a mosaic-audio obtaining request, so that the media server may determine the corresponding mosaic audio according to the obtaining address of the mosaic audio and return the corresponding mosaic audio to the DASH client. The mosaic audio that is obtained from the media server by the DASH client may be specifically a mosaic audio segment (segment). It may be understood that the DASH client may obtain, from the media server, only the mosaic audio that corresponds to the highlighted logical presentation cell, so as to reduce a volume of data obtained from the media server. Alternatively, the DASH client may obtain, from the media server, the mosaic audio of all the logical presentation cells, so as to avoid audio playing interruption that may occur when the user changes the highlighted logical presentation cell.

In another embodiment of the present invention, the at least two logical presentation cells of the mosaic service include a main logical presentation cell, and the main logical presentation cell needs to present original media of the highlighted logical presentation cell. The original media may be an original video, or an original video and original audio, or an original text, or the like. The sending unit 702 may be further configured to send an original-media obtaining request for obtaining the original media of the highlighted logical presentation cell to the MBMS client according to a highlighted-logical-presentation-cell original-media description provided in the media presentation description file. The receiving unit 701 may be further configured to receive the original media, sent by the MBMS client, of the highlighted logical presentation cell. The presentation unit 703 may be further configured to present the original media, received by the receiving unit 701, of the highlighted logical presentation cell at a location of the main logical presentation cell according to a main-logical-presentation-cell location description provided in the media presentation description file.

The main logical presentation cell may be described by using a presentation information attribute/element in the MPD file. For example, when a value of the presentation information attribute/element is Main_video, it indicates that a corresponding logical presentation cell is a main logical presentation cell. It may be understood that the value of the presentation information attribute/element may be agreed on in advance. For example, alternatively, when the value of the presentation information attribute/element is Main, it may indicate that a corresponding logical presentation cell is a main logical presentation cell.

After a user browses the logical presentation cells of the mosaic service, if the user is relatively interested in a particular logical presentation cell, the user may choose to present the logical presentation cell. Therefore, in another embodiment of the present invention, the sending unit 702 may be further configured to send an original-media obtaining request for obtaining original media of a selected logical presentation cell to the MBMS client according to a selected-logical-presentation-cell original-media description provided in the media presentation description file. The receiving unit 701 may be further configured to receive the original media, sent by the MBMS client, of the selected logical presentation cell. The presentation unit 703 may be further configured to present the original media, received by the receiving unit, of the selected logical presentation cell.

The selected logical presentation cell may be presented in a full-screen presentation manner or another manner, and the mosaic service is simultaneously terminated. The original media of the logical presentation cell may be described by using an original-media attribute/element in the MPD file. Specifically, the original-media attribute/element may describe original media of a media presentation cell by using an MPD obtaining address of the original media.

In this embodiment of the present invention, the mosaic service may be specified by using the mosaic element/attribute in the MPD file. For example, as long as the MPD file includes a mosaic descriptor, the DASH client may determine that the MPD file describes a mosaic service.

In this embodiment of the present invention, the MPD file that describes the mosaic service may include at least one of the following attributes/elements:
a logical-presentation-cell quantity attribute/element used to describe a quantity of logical presentation cells;
a horizontal-elementary-cell quantity attribute/element used to describe a quantity of horizontal elementary cells;
a vertical-elementary-cell quantity attribute/element used to describe a quantity of vertical elementary cells;
a logical-presentation-cell attribute/element used to describe information about a logical presentation cell, where a quantity of logical-presentation-cell attributes/elements in the media presentation description file may be less than or equal to a quantity of logical presentation cells; for example, when the logical presentation cells include a main logical presentation cell, a quantity of logical-presentation-cell attributes/elements may be less than the quantity of logical presentation cells, and in this case, the main logical presentation cell may be described by using a separate descriptor;
a logical-presentation-cell identifier attribute/element used to describe an identifier of a logical presentation cell;
a logical-presentation-cell presentation-location attribute/element used to describe a presentation location of a logical presentation cell;
a presentation information attribute/element used to describe a presentation type of a logical presentation cell;
a mosaic-media link attribute/element used to describe mosaic media of a logical presentation cell;
a mosaic-audio link attribute/element used to describe mosaic audio of a logical presentation cell;
a mosaic-video link attribute/element used to describe a mosaic video of a logical presentation cell; or
an original-media attribute/element used to describe original media of a logical presentation cell.

It may be understood that attributes/elements included in the MPD file that describes the mosaic service may be adjusted and combined according to a requirement. For example, when a quantity of elementary cells is agreed on in advance, the MPD file may not include the horizontal-elementary-cell quantity attribute/element used to describe the quantity of horizontal elementary cells and the vertical-elementary-cell quantity attribute/element used to describe the quantity of vertical elementary cells. Therefore, the attributes/elements included in the MPD file may be used only as an example, and do not constitute a limitation to an attribute/element included in the MPD file.

For specific implementations of the apparatus embodiment in this embodiment of the present invention, refer to the corresponding method embodiment. Some specific implementation processes are not described in detail in the apparatus embodiment again.

FIG. 8 shows a structure of a mosaic service delivery apparatus according to an embodiment of the present invention. As shown in FIG. 8, the apparatus includes: a receiving unit 801, a matching unit 802, and a sending unit 803.

The receiving unit 801 is configured to: receive a mosaic USD that describes a mosaic service, where the mosaic USD describes mosaic media that corresponds to logical presentation cells of the mosaic service; receive, from a broadcast multicast server, the mosaic media that corresponds to the logical presentation cells of the mosaic service described in the mosaic USD; and receive, from a DASH client, a mosaic-media obtaining request for obtaining mosaic media, where the mosaic-media obtaining request includes a mosaic media obtaining address described in a media presentation description file that corresponds to the mosaic service.

The mosaic USD may include a description of mosaic media that correspond to each logical presentation cell. For example, in an embodiment of the present invention, the mosaic USD may include a deliveryMethod element, and the element includes one or more r12:broadcastAppService instances. One r12:broadcastAppService instance indicates one broadcast stream representation (representation), and one r12:broadcastAppService instance corresponds to one logical presentation cell. Alternatively, the element may include one or more r12:unicastAppService instances. One r12:unicastAppService instance indicates one unicast stream representation (representation), and one r12:unicastAppService instance corresponds to one logical presentation cell.

The mosaic service may be specified by using a mosaic service indicator in the mosaic USD. For example, in an embodiment of the present invention, the mosaic USD includes a userServiceDescription element, and a value of a serviceclass attribute of the element may be mosaic, to indicate that the USD is a mosaic USD that describes a mosaic service. The MBMS client may passively receive the mosaic media that corresponds to the logical presentation cells of the mosaic service, or may actively obtain, according to the mosaic USD, the mosaic media that corresponds to the logical presentation cells of the mosaic service. The mosaic media may be specifically a mosaic video, or mosaic audio, or a mosaic video and mosaic audio, or a mosaic text, or the like. The mosaic media obtaining address may be specifically a segment URL.

The matching unit 802 is configured to perform matching according to the mosaic media obtaining address received by the receiving unit 801, to obtain a mosaic-media content identifier described in the mosaic USD.

The MBMS client may specifically perform matching according to the segment URL to obtain the mosaic-media content identifier described in the mosaic USD. For example, in an embodiment of the present invention, the MBMS client may perform matching according to a segment URL to obtain a basePattern attribute in an r12:broadcastAppService instance or an r12:unicastAppService instance, so as to determine corresponding mosaic media according to the basePattern attribute.

The sending unit 803 is configured to send, to the DASH client, mosaic media that corresponds to the mosaic-media content identifier obtained by performing matching by the matching unit 802.

It may be known from the above that in this embodiment, a mosaic USD file describes mosaic media of logical presentation cells of a mosaic service. After receiving a mosaic-media obtaining request from a DASH client, an MBMS client may perform matching according to the mosaic USD file to obtain mosaic media, requested by the DASH client, of a logical presentation cell. Therefore, a mosaic server does not need to combine the mosaic media of the logical presentation cells, and an amount of computation of the mosaic server is reduced. In addition, because the mosaic media of the logical presentation cells of the mosaic service is described in the mosaic USD, content that needs to be presented on the logical presentation cells may be flexibly adjusted according to a requirement, and presentation flexibility of the mosaic service is also improved.

In another embodiment of the mosaic service delivery apparatus of the present invention, the receiving unit 801 may be further configured to: receive original-media USDs that correspond to the logical presentation cells, where the original-media USDs describe original media that corresponds to the logical presentation cells, and the original-media USDs and the logical presentation cells are in a one-to-one correspondence; receive, from the broadcast multicast server, the original media, described in the original USDs, of the logical presentation cells; and receive, from the DASH client, an original-media obtaining request for obtaining original media, where the original-media obtaining request includes an original media obtaining address described in the media presentation description file. The matching unit 802 may be further configured to perform matching according to the original media obtaining address received by the receiving unit 801, to obtain an original-media identifier described in the original-media USDs. The sending unit 803 may be further configured to send, to the DASH client, original media that corresponds to the original-media identifier obtained by performing matching by the matching unit 802.

The original media may be specifically an original video, or original audio, or an original video and original audio, or an original text, or the like. An original media obtaining address may be specifically a segment URL. The matching unit 802 may specifically perform matching according to the original media obtaining address to obtain an original-media identifier described in the original-media USDs. The MBMS client may specifically perform matching according to the segment URL to obtain an original-media content identifier described in the original-media USDs. For example, in an embodiment of the present invention, the MBMS client may perform matching according to a segment URL to obtain a basePattern attribute in an r12:broadcastAppService instance or an r12:unicastAppService instance, so as to determine corresponding original media according to the basePattern attribute.

In an embodiment of the present invention, the original-media USDs and the mosaic USD may belong to a same USD bundle. It may be understood that the original-media USDs and the mosaic USD may belong to different USD bundles.

In an embodiment of the present invention, the mosaic USD received by the receiving unit 801 includes a media presentation description file identifier, and the mosaic service delivery apparatus may further include an obtaining unit, configured to obtain the media presentation description file according to the media presentation description file identifier included in the mosaic USD received by the receiving unit 801. The sending unit 803 may be further configured to send the media presentation description file obtained by the obtaining unit to the DASH client.

In an embodiment of the present invention, the mosaic USD received by the receiving unit 801 includes a media presentation description file element/attribute, and the mosaic service delivery apparatus may further include a generation unit, configured to generate the media presentation description file according to the media presentation description file element/attribute included in the mosaic USD received by the receiving unit 801. The sending unit 803 may be further configured to send the media presentation description file generated by the generation unit to the DASH client.

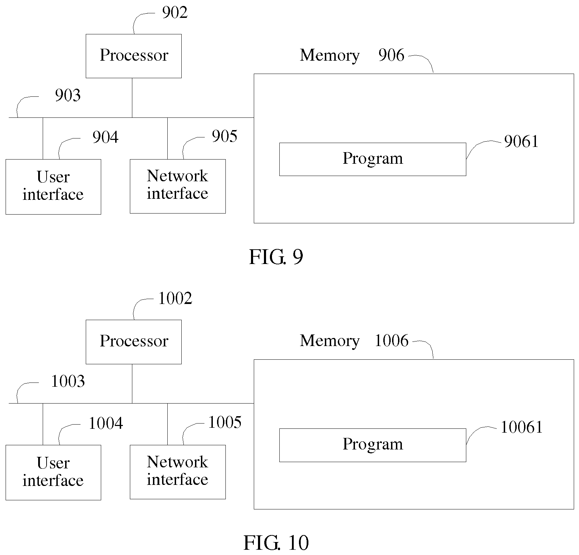

FIG. 9 shows a structure of a mosaic service presentation apparatus according to another embodiment of the present invention. The apparatus includes at least one processor 902 (such as a CPU), at least one network interface 905 or another communications interface, a memory 906, and at least one communications bus 903 configured to implement connection and communication between these components. The processor 902 is configured to execute an executable module, such as a computer program, stored in the memory 906. The memory 906 may include a high-speed random access memory (RAM: Random Access Memory), and may further include a non-volatile memory (non-volatile memory), for example, at least one magnetic disk storage. A communications connection between this apparatus and at least one another network element is implemented by using the at least one (wired or wireless) network interface 905, and Internet, a wide area network, a local area network, a metropolitan area network or the like may be used.

In some implementation manners, the memory 906 stores a program 9061. The program 9061 may be executed by the processor 902, and the program includes: receiving a media presentation description file that describes a mosaic service, where the media presentation description file describes presentation locations of logical presentation cells of the mosaic service and mosaic media of the logical presentation cells; obtaining the mosaic media of the logical presentation cells from an MBMS client according to a logical-presentation-cell mosaic-media description provided in the media presentation description file; and presenting the mosaic media at the presentation locations of the logical presentation cells according to a logical-presentation-cell presentation-location description provided in the media presentation description file.

It may be known from the above that in this embodiment, a mosaic MPD file describes presentation locations of logical presentation cells of a mosaic service and mosaic media of the logical presentation cells. After obtaining the mosaic MPD file, a DASH client may obtain the mosaic media of the logical presentation cells according to a description in the mosaic MPD file, and present the corresponding mosaic media at the presentation locations described in the mosaic MPD file. Therefore, a mosaic server does not need to combine the mosaic media of the logical presentation cells, and an amount of computation of the mosaic server is reduced. In addition, because the presentation locations of the logical presentation cells of the mosaic service and the mosaic media of the logical presentation cells are described in the mosaic MPD file, content that needs to be presented on the logical presentation cells may be flexibly adjusted according to a requirement, and presentation flexibility of the mosaic service is also improved.

In another embodiment, the program 9061 may further include: obtaining, from the MBMS client, mosaic audio of a highlighted logical presentation cell according to a highlighted-logical-presentation-cell mosaic-audio description provided in the media presentation description file; and playing the mosaic audio of the highlighted logical presentation cell.

In another embodiment, the program 9061 may further include: obtaining, from the MBMS client, original media of the highlighted logical presentation cell according to a highlighted-logical-presentation-cell original-media description provided in the media presentation description file; and presenting the original media of the highlighted logical presentation cell at a location of a main logical presentation cell according to a main-logical-presentation-cell location description provided in the media presentation description file.

In another embodiment, the program 9061 may further include: obtaining, from the MBMS client, original media of a selected logical presentation cell according to a selected-logical-presentation-cell original-media description provided in the media presentation description file; and presenting the original media of the logical presentation cell.

FIG. 10 shows a structure of a mosaic service delivery apparatus according to another embodiment of the present invention. The apparatus includes at least one processor 1002 (such as a CPU), at least one network interface 1005 or another communications interface, a memory 1006, and at least one communications bus 1003 configured to implement connection and communication between these components. The processor 1002 is configured to execute an executable module, such as a computer program, stored in the memory 1006. The memory 1006 may include a high-speed random access memory (RAM: Random Access Memory), and may further include a non-volatile memory (non-volatile memory), for example, at least one magnetic disk storage. A communications connection between this apparatus and at least one another network element is implemented by using the at least one (wired or wireless) network interface 1005, and Internet, a wide area network, a local area network, a metropolitan area network or the like may be used.

In some implementation manners, the memory 1006 stores a program 10061. The program 10061 may be executed by the processor 1002, and the program includes: receiving a mosaic USD that describes a mosaic service, where the mosaic USD describes mosaic media that corresponds to logical presentation cells of the mosaic service; receiving, from a broadcast multicast server, the mosaic media that corresponds to the logical presentation cells of the mosaic service described in the mosaic USD; receiving, from a DASH client, a mosaic-media obtaining request for obtaining mosaic media, where the mosaic-media obtaining request includes a mosaic media obtaining address described in a media presentation description file that corresponds to the mosaic service; performing matching according to the mosaic media obtaining address to obtain a mosaic-media content identifier described in the mosaic USD; and sending mosaic media that corresponds to the mosaic-media content identifier to the DASH client.

It may be known from the above that in this embodiment, a mosaic USD file describes mosaic media of logical presentation cells of a mosaic service. After receiving a mosaic-media obtaining request from a DASH client, an MBMS client may perform matching according to the mosaic USD file to obtain mosaic media, requested by the DASH client, of a logical presentation cell. Therefore, a mosaic server does not need to combine the mosaic media of the logical presentation cells, and an amount of computation of the mosaic server is reduced. In addition, because the mosaic media of the logical presentation cells of the mosaic service is described in the mosaic USD, content that needs to be presented on the logical presentation cells may be flexibly adjusted according to a requirement, and presentation flexibility of the mosaic service is also improved.

In another embodiment, the program 10061 may further include: receiving original-media USDs that correspond to the logical presentation cells, where the original-media USDs describe original media that corresponds to the logical presentation cells, and the original-media USDs and the logical presentation cells are in a one-to-one correspondence; receiving, from the broadcast multicast server, the original media, described in the original USDs, of the logical presentation cells; receiving, from the DASH client, an original-media obtaining request for obtaining original media, where the original-media obtaining request includes an original media obtaining address described in the media presentation description file; performing matching according to the original media obtaining address to obtain an original-media identifier described in the original-media USDs; and sending original media that corresponds to the original-media identifier to the DASH client.

Content such as information exchange and an execution process between the modules in the foregoing apparatus and system is based on a same idea as the method embodiments of the present invention. Therefore, for detailed content, refer to descriptions in the method embodiments of the present invention. Details are not described herein again.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (ROM, Read-Only Memory), or a random access memory (RAM, Random Access Memory).

Specific examples are used in this specification to describe the principle and implementation manners of the present invention. The descriptions of the foregoing embodiments are merely intended to help understand the method and idea of the present invention. In addition, with respect to the implementation manners and the application scope, modifications may be made by a person of ordinary skill in the art according to the idea of the present invention. Therefore, this specification shall not be construed as a limitation on the present invention.

## Claims

1. A mosaic service presentation method implemented by a Dynamic Adaptive Streaming over HTTP, DASH, client, comprising:
receiving (101) a media presentation description file that describes a mosaic service, wherein the media presentation description file describes presentation locations of logical presentation cells of the mosaic service and mosaic media of the logical presentation cells;
obtaining (102) the mosaic media of the logical presentation cells from a multimedia broadcast multicast service, MBMS, client according to a description of the mosaic media of the logical presentation cells provided in the media presentation description file; and
presenting (103) the mosaic media at the presentation locations of the logical presentation cells according to a logical-presentation-ccll presentation-location description provided in the media presentation description file;
wherein a presentation location of a logical presentation cell of the mosaic service is described by using a logical-presentation-cell presentation-location attribute/element in the media presentation description file;
wherein the logical-presentation-cell presentation-location attribute/element describes the presentation location of the logical presentation cell of the mosaic service by using a number of an elementary cell covered by the logical presentation cell; and
wherein mosaic media of the logical presentation cell is described by using a mosaic-media link attribute/element in the media presentation description file.

2. The mosaic service presentation method according to claim 1, wherein the mosaic-media link attribute/element describes the mosaic media of the logical presentation cell by using an identifier of an adaptive-mosaic-media set that corresponds to the mosaic media.

3. The mosaic service presentation method according to any one of claims 1 to 2, wherein the mosaic media comprises only a video, and the method further comprises:
obtaining, from the MBMS client, mosaic audio of a highlighted logical presentation cell according to a highlighted-logical-presentation-cell mosaic-audio description provided in the media presentation description file; and
playing the mosaic audio of the highlighted logical presentation cell;
wherein the mosaic audio of the highlighted logical presentation cell is described by using a mosaic-audio link attribute/element in the media presentation description file;
wherein the mosaic-audio attribute/element describes the mosaic audio of the highlighted logical presentation cell by using an identifier of an adaptive-mosaic-audio set that corresponds to the highlighted logical presentation cell.

4. The mosaic service presentation method according to claim 3, wherein there are at least two logical presentation cells, the at least two logical presentation cells comprise a main logical presentation cell, and the method further comprises:
obtaining, from the MBMS client, original media of the highlighted logical presentation cell according to a highlighted-logical-presentation-cell original-media description provided in the media presentation description file; and
presenting the original media of the highlighted logical presentation cell at a location of the main logical presentation cell according to a main-logical-presentation-cell location description provided in the media presentation description file;
wherein the main logical presentation cell is described by using a presentation information attribute/element;
wherein when a value of the presentation information attribute/element is Main_video, it indicates that a corresponding logical presentation cell is a main logical presentation cell.

5. The mosaic service presentation method according to any one of claims 1 to 4, wherein the method further comprises:
obtaining, from the MBMS client, original media of a selected logical presentation cell according to a selected-logical-presentation-cell original-media description provided in the media presentation description file; and
presenting the original media of the logical presentation cell;
wherein the original media is described by using an original-media attribute/element;
wherein the original-media attribute/element of the logical presentation cell describes the original media by using a media presentation description, MPD, obtaining address of the original media.

6. The mosaic service presentation method according to any one of claims 1 to 5, wherein the mosaic service is specified by using a mosaic element/attribute of the media presentation description file.

7. The mosaic service presentation method according to any one of claims 1 to 6, wherein the media presentation description file comprises at least one of the following attributes/elements:
a logical-presentation-cell quantity attribute/element used to describe a quantity of logical presentation cells;
a horizontal-elementary-cell quantity attribute/element used to describe a quantity of horizontal elementary cells;
a vertical-elementary-cell quantity attribute/element used to describe a quantity of vertical elementary cells;
a logical-presentation-cell attribute/element used to describe information about a logical presentation cell, wherein a quantity of logical-presentation-cell attributes/elements in the media presentation description file is less than or equal to a quantity of logical presentation cells;
a logical-presentation-cell identifier attribute/element used to describe an identifier of a logical presentation cell;
a logical-presentation-cell presentation-location attribute/element used to describe a presentation location of a logical presentation cell;
a presentation information attribute/element used to describe a presentation type of a logical presentation cell;
a mosaic-media link attribute/element used to describe mosaic media of a logical presentation cell;
a mosaic-audio link attribute/element used to describe mosaic audio of a logical presentation cell;
a mosaic-video link attribute/element used to describe a mosaic video of a logical presentation cell; or
an original-media attribute/element used to describe original media of a logical presentation cell.

8. A mosaic service presentation apparatus (700) being a Dynamic Adaptive Streaming over HTTP, DASH, client, comprising:
a receiving unit (701), configured to: receive a media presentation description file that describes a mosaic service, wherein the media presentation description file describes presentation locations of logical presentation cells of the mosaic service and mosaic media of the logical presentation cells, and receive the mosaic media of the logical presentation cells that is sent by a multimedia broadcast multicast service, MBMS, client;
a sending unit (702), configured to send a mosaic-media obtaining request for obtaining the mosaic media of the logical presentation cells to the MBMS client according to a description of the mosaic media of the logical presentation cells provided in the media presentation description file received by the receiving unit (701); and
a presentation unit (703), configured to present the mosaic media at the presentation locations of the logical presentation cells according to a logical-presentation-cell presentation-location description provided in the media presentation description file received by the receiving unit (701);
wherein a presentation location of a logical presentation cell of the mosaic service is described by using a logical-presentation-cell presentation-location attribute/element in the media presentation description file;
wherein the logical-presentation-cell presentation-location attribute/element describes the presentation location of the logical presentation cell of the mosaic service by using a number of an elementary cell covered by the logical presentation cell;
wherein mosaic media of the logical presentation cell is described by using a mosaic-media link attribute/element in the media presentation description file.

9. The mosaic service presentation apparatus (700) according to claim 8, wherein the mosaic-media link attribute/element describes the mosaic media of the logical presentation cell by using an identifier of an adaptive-mosaic-media set that corresponds to the mosaic media.

10. The mosaic service presentation apparatus (700) according to any one of claims 8 to 9, wherein the mosaic media received by the receiving unit (701) comprises only a video;
the sending unit (702) is further configured to send a mosaic-audio obtaining request for obtaining mosaic audio of a highlighted logical presentation cell to the MBMS client according to a highlighted-logical-presentation-cell mosaic-audio description provided in the media presentation description file received by the receiving unit (701);
the receiving unit (701) is further configured to receive the mosaic audio, sent by the MBMS client, of the highlighted logical presentation cell; and
the presentation unit (703) is further configured to play the mosaic audio, received by the receiving unit (701), of the highlighted logical presentation cell;
wherein the mosaic audio of the highlighted logical presentation cell is described by using a mosaic-audio link attribute/element in the media presentation description file;
wherein the mosaic-audio attribute/element describes the mosaic audio of the highlighted logical presentation cell by using an identifier of an adaptive-mosaic-audio set that corresponds to the highlighted logical presentation cell.

11. The mosaic service presentation apparatus (700) according to claim 10, wherein there are at least two logical presentation cells, and the at least two logical presentation cells comprise a main logical presentation cell;
the sending unit (702) is further configured to send an original-media obtaining request for obtaining original media of the highlighted logical presentation cell to the MBMS client according to a highlighted-logical-presentation-cell original-media description provided in the media presentation description file;
the receiving unit (701) is further configured to receive the original media, sent by the MBMS client, of the highlighted logical presentation cell; and
the presentation unit (703) is further configured to present the original media, received by the receiving unit (701), of the highlighted logical presentation cell at a location of the main logical presentation cell according to a main-logical-presentation-cell location description provided in the media presentation description file;
wherein the main logical presentation cell is described by using a presentation information attribute/element;
wherein when a value of the presentation information attribute/element is Main_video, it indicates that a corresponding logical presentation cell is a main logical presentation cell.

12. The mosaic service presentation apparatus (700) according to any one of claims 8 to 11, wherein
the sending unit (702) is further configured to send an original-media obtaining request for obtaining original media of a selected logical presentation cell to the MBMS client according to a selected-logical-presentation-cell original-media description provided in the media presentation description file;
the receiving unit (701) is further configured to receive the original media, sent by the MBMS client, of the selected logical presentation cell; and
the presentation unit (703) is further configured to present the original media, received by the receiving unit (701), of the selected logical presentation cell;
wherein the original media is described by using an original-media attribute/element;
wherein the original-media attribute/element of the logical presentation cell describes the original media by using a media presentation description, MPD, obtaining address of the original media.

13. The mosaic service presentation apparatus (700) according to any one of claims 8 to 12, wherein the mosaic service is specified by using a mosaic element/attribute of the media presentation description file.

14. The mosaic service presentation apparatus (700) according to any one of claims 8 to 13, wherein the media presentation description file comprises at least one of the following attributes/elements:
a logical-presentation-cell quantity attribute/element used to describe a quantity of logical presentation cells;
a horizontal-elementary-cell quantity attribute/element used to describe a quantity of horizontal elementary cells;
a vertical-elementary-cell quantity attribute/element used to describe a quantity of vertical elementary cells;
a logical-presentation-cell attribute/element used to describe information about a logical presentation cell, wherein a quantity of logical-presentation-cell attributes/elements in the media presentation description file is less than or equal to a quantity of logical presentation cells;
a logical-presentation-cell identifier attribute/element used to describe an identifier of a logical presentation cell;
a logical-presentation-cell presentation-location attribute/element used to describe a presentation location of a logical presentation cell;
a presentation information attribute/element used to describe a presentation type of a logical presentation cell;
a mosaic-media link attribute/element used to describe mosaic media of a logical presentation cell;
a mosaic-audio link attribute/element used to describe mosaic audio of a logical presentation cell;
a mosaic-video link attribute/element used to describe a mosaic video of a logical presentation cell; or
an original-media attribute/element used to describe original media of a logical presentation cell.

## Patentansprüche

1. Verfahren zur Mosaikdienstdarstellung, implementiert mittels eines "Dynamic Adaptive Streaming over HTTP"-, DASH-, -Clients, umfassend:
Empfangen (101) einer Mediendarstellungsbeschreibungsdatei, die einen Mosaikdienst beschreibt, wobei die Mediendarstellungsbeschreibungsdatei Darstellungsorte von logischen Darstellungszellen des Mosaikdienstes und Mosaikmedien der logischen Darstellungszellen beschreibt;
Erhalten (102) der Mosaikmedien der logischen Darstellungszellen von einem "Multimedia Broadcast Multicast Service"-, MBMS-, -Client entsprechend einer in der Mediendarstellungsbeschreibungsdatei bereitgestellten Darstellungsortbeschreibung von logischen Darstellungszellen; und
Darstellen (103) der Mosaikmedien an den Darstellungsorten der logischen Darstellungszellen entsprechend einem in der Mediendarstellungsbeschreibungsdatei bereitgestellten Darstellungsortbeschreibung für logische Darstellungszellen;
wobei ein Darstellungsort einer logischen Darstellungszelle des Mosaikdienstes unter Verwendung eines Darstellungsort-Attributs/Elements für logische Darstellungszellen in der Mediendarstellungsbeschreibungsdatei beschrieben ist;
wobei das Darstellungsort-Attribut/Element für logische Darstellungszellen den Darstellungsort der logischen Darstellungszelle des Mosaikdienstes unter Verwendung einer Zahl einer durch die logische Darstellungszelle abgedeckten Elementarzelle beschreibt; und
wobei Mosaikmedien der logischen Darstellungszelle unter Verwendung eines Mosaikmedien-Link-Attributs/Elements in der Mediendarstellungsbeschreibungsdatei beschrieben sind.

2. Verfahren zur Mosaikdienstdarstellung nach Anspruch 1, wobei das Mosaikmedien-Link-Attribut/Element die Mosaikmedien der logischen Darstellungszelle unter Verwendung einer Kennung einer Gruppe adaptiver Mosaikmedien beschreibt, die den Mosaikmedien entsprechen.

3. Verfahren zur Mosaikdienstdarstellung nach einem der Ansprüche 1 bis 2, wobei die Mosaikmedien nur ein Video umfassen und das Verfahren ferner umfasst:
Erhalten von Mosaik-Audio einer hervorgehobenen logischen Darstellungszelle vom MBMS-Client entsprechend einer in der Mediendarstellungsbeschreibungsdatei bereitgestellten Mosaik-Audio-Beschreibung einer hervorgehobenen logischen Darstellungszelle; und
Abspielen des Mosaik-Audios der hervorgehobenen logischen Darstellungszelle;
wobei das Mosaik-Audio der hervorgehobenen logischen Darstellungszelle unter Verwendung eines Mosaik-Audio-Link-Attributs/Elements in der Mediendarstellungsbeschreibungsdatei beschrieben ist;
wobei das Mosaik-Audio-Attribut/Element das Mosaik-Audio der hervorgehobenen logischen Darstellungszelle unter Verwendung einer Kennung eine Gruppe von adaptivem Mosaik-Audio beschreibt, das der hervorgehobenen logischen Darstellungszelle entspricht.

4. Verfahren zur Mosaikdienstdarstellung nach Anspruch 3, wobei mindestens zwei logische Darstellungszellen vorliegen, die mindestens zwei logischen Darstellungszellen eine logische Haupt-Darstellungszelle umfassen und das Verfahren ferner umfasst:
Erhalten von Originalmedien der hervorgehobenen logischen Darstellungszelle vom MBMS-Client entsprechend einer in der Mediendarstellungsbeschreibungsdatei bereitgestellten Originalmedienbeschreibung von hervorgehobenen logischen Präsentationszellen; und
Darstellen der Originalmedien der hervorgehobenen logischen Darstellungszelle an einem Ort der logischen Haupt-Darstellungszelle entsprechend einer in der Mediendarstellungsbeschreibungsdatei bereitgestellten Ortsbeschreibung von logischen Haupt-Darstellungszellen;
wobei die logische Haupt-Darstellungszelle unter Verwendung eines Darstellungsinformations-Attributs/Elements beschrieben ist;
wobei, wenn ein Wert des Darstellungsinformations-Attributs/Elements Main_video ist, dies angibt, dass eine entsprechende logische Darstellungszelle eine logische Haupt-Darstellungszelle ist.

5. Verfahren zur Mosaikdienstdarstellung entsprechend einem der Ansprüche 1 bis 4, wobei das Verfahren ferner umfasst:
Erhalten von Originalmedien einer ausgewählten logischen Präsentationszelle vom MBMS-Client entsprechend einer in der Mediendarstellungsbeschreibungsdatei bereitgestellten Originalmedienbeschreibung von ausgewählten logischen Darstellungszellen; und
Darstellen der Originalmedien der logischen Darstellungszelle;
wobei die Originalmedien unter Verwendung eines Originalmedien-Attributs/Elements beschrieben sind;
wobei das Originalmedien-Attribut/Element der logischen Darstellungszelle die Originalmedien unter Verwendung einer Mediendarstellungsbeschreibung, MPD, beschreibt, wobei die Adresse der Originalmedien erhalten wird.

6. Verfahren zur Mosaikdienstdarstellung nach einem der Ansprüche 1 bis 5, wobei der Mosaikdienst unter Verwendung eines Mosaik-Elements/Attributs der Mediendarstellungsbeschreibungsdatei angegeben ist.

7. Verfahren zur Mosaikdienstdarstellung nach einem der Ansprüche 1 bis 6, wobei die Mediendarstellungsbeschreibungsdatei mindestens eines der folgenden Attribute/Elemente umfasst:
ein Mengenattribut/-element von logischen Darstellungszellen, verwendet zum Beschreiben einer Menge von logischen Darstellungszellen;
ein Mengenattribut/-element von horizontalen Elementarzellen, verwendet zum Beschreiben einer Menge von horizontalen Elementarzellen;
ein Mengenattribut/-element von vertikalen Elementarzellen, verwendet zum Beschreiben einer Menge von vertikalen Elementarzellen;
ein Attribut/Element von logischen Darstellungszellen, verwendet zum Beschreiben von Information zu einer logischen Darstellungszelle, wobei eine Menge von Attributen/Elementen logischer Darstellungszellen in der Mediendarstellungsbeschreibungsdatei geringer als eine Menge oder gleich einer Menge von logischen Darstellungszellen ist;
ein Kennungsattribut/-element von logischen Darstellungszellen, verwendet zum Beschreiben einer Kennung einer logischen Darstellungszelle;
ein Darstellungsort-Attribut/Element von logischen Darstellungszellen, verwendet zum Beschreiben eines Darstellungsorts einer logischen Darstellungszelle;
ein Darstellungsinformations-Attribut/Element, verwendet zum Beschreiben eines Darstellungstyps einer logischen Darstellungszelle;
ein Mosaikmedien-Link-Attribut/Element, verwendet zum Beschreiben von Mosaikmedien einer logischen Darstellungszelle;
ein Mosaik-Audio-Link-Attribut/Element, verwendet zum Beschreiben von Mosaik-Audio einer logischen Darstellungszelle;
ein Mosaik-Video-Link-Attribut/Element, verwendet zum Beschreiben eines Mosaik-Videos einer logischen Darstellungszelle; oder
ein Originalmedien-Attribut/Element, verwendet zum Beschreiben von Originalmedien einer logischen Darstellungszelle.

8. Vorrichtung (700) zur Mosaikdienstdarstellung, die ein "Dynamic Adaptive Streaming over HTTP"-, DASH-, -Client ist, umfassend:
eine Empfangseinheit (701), ausgelegt zum Empfangen einer Mediendarstellungsbeschreibungsdatei, die einen Mosaikdienst beschreibt, wobei die Mediendarstellungsbeschreibungsdatei Darstellungsorte von logischen Darstellungszellen des Mosaikdienstes und Mosaikmedien der logischen Darstellungszellen beschreibt, und Empfangen der Mosaikmedien der logischen Darstellungszellen, die von einem "Multimedia Broadcast Multicast Service"-, MBMS-, -Client gesendet werden;
eine Sendeeinheit (702), ausgelegt zum Senden einer Anforderung zum Erhalten von Mosaikmedien der logischen Darstellungszellen an den MBMS-Client entsprechend einer in der Mediendarstellungsbeschreibungsdatei bereitgestellten, von der Empfangseinheit (701) empfangenen Beschreibung der Mosaikmedien der logischen Darstellungszellen; und
eine Darstellungseinheit (703), ausgelegt zum Darstellen der Mosaikmedien an den Darstellungsorten der logischen Darstellungszellen entsprechend einer in der Mediendarstellungsbeschreibungsdatei bereitgestellten, von der Empfangseinheit (701) empfangenen Beschreibung der Mosaikmedien der logischen Darstellungszellen;
wobei ein Darstellungsort einer logischen Darstellungszelle des Mosaikdienstes unter Verwendung eines Darstellungsort-Attributs/Elements für logische Darstellungszellen in der Mediendarstellungsbeschreibungsdatei beschrieben ist;
wobei das Darstellungsort-Attribut/Element für logische Darstellungszellen den Darstellungsort der logischen Darstellungszelle des Mosaikdienstes unter Verwendung einer Zahl einer durch die logische Darstellungszelle abgedeckten Elementarzelle beschreibt;
wobei Mosaikmedien der logischen Darstellungszelle unter Verwendung eines Mosaikmedien-Link-Attributs/Elements in der Mediendarstellungsbeschreibungsdatei beschrieben sind.

9. Vorrichtung (700) zur Musikdienstdarstellung nach Anspruch 8, wobei das Mosaikmedien-Link-Attribut/Element die Mosaikmedien der logischen Darstellungszelle unter Verwendung einer Kennung einer Gruppe adaptiver Mosaikmedien beschreibt, die den Mosaikmedien entsprechen.

10. Vorrichtung (700) zur Mosaikdienstdarstellung nach einem der Ansprüche 8 bis 9, wobei die von der Empfangseinheit (701) empfangenen Mosaikmedien nur ein Video umfassen;
die Sendeeinheit (702) ferner ausgelegt ist zum Senden einer Mosaik-Audio-Erhaltanforderung an den MBMS-Client zum Erhalten von Musik-Audio einer hervorgehobenen logischen Darstellungszelle entsprechend einer in der von der Empfangseinheit (701) empfangenen Mediendarstellungsbeschreibungsdatei bereitgestellten Mosaik-Audio-Beschreibung von hervorgehobenen logischen Darstellungszellen;
die Empfangseinheit (701) ferner ausgelegt ist zum Empfangen des vom MBMS-Client gesendeten Mosaik-Audios der hervorgehobenen logischen Darstellungszelle; und
die Darstellungseinheit (703) ferner ausgelegt ist zum Abspielen des von der Empfangseinheit (701) empfangenen Mosaik-Audios der hervorgehobenen logischen Darstellungszelle;
wobei das Mosaik-Audio der hervorgehobenen logischen Darstellungszelle unter Verwendung eines Mosaik-Audio-Link-Attributs/Elements in der Mediendarstellungsbeschreibungsdatei beschrieben ist;
wobei das Mosaik-Audio-Attribut/Element das Mosaik-Audio der hervorgehobenen logischen Darstellungszelle unter Verwendung einer Kennung eine Gruppe von adaptivem Mosaik-Audio beschreibt, die der hervorgehobenen logischen Darstellungszelle entspricht.

11. Vorrichtung (700) zur Mosaikdienstdarstellung nach Anspruch 10, wobei mindestens zwei logische Darstellungszellen vorliegen und die mindestens zwei logischen Darstellungszellen eine logische Haupt-Darstellungszelle umfassen;
die Sendeeinheit (702) ferner ausgelegt ist zum Senden einer Originalmedien-Erhaltanforderung an den MBMS-Client zum Erhalten von Originalmedien der hervorgehobenen logischen Darstellungszelle entsprechend einer in der Mediendarstellungsbeschreibungsdatei bereitgestellten Originalmedienbeschreibung von hervorgehobenen logischen Darstellungszellen;
die Empfangseinheit (701) ferner ausgelegt ist zum Empfangen der vom MBMS-Client gesendeten Originalmedien der hervorgehobenen logischen Darstellungszelle; und
die Darstellungseinheit (703) ferner ausgelegt ist zum Darstellen der von der Empfangseinheit (701) empfangenen Originalmedien der hervorgehobenen logischen Darstellungszelle an einem Ort der logischen Haupt-Darstellungszelle entsprechend einer in der Mediendarstellungsbeschreibungsdatei bereitgestellten Ortsbeschreibung einer logischen Haupt-Darstellungszelle;
wobei die logische Haupt-Darstellungszelle unter Verwendung eines Darstellungsinformations-Attributs/Elements beschrieben ist;
wobei, wenn ein Wert des Darstellungsinformations-Attributs/Elements Main_video ist, dies angibt, dass eine entsprechende logische Darstellungszelle eine logische Haupt-Darstellungszelle ist.

12. Vorrichtung (700) zur Mosaikdienstdarstellung nach einem der Ansprüche 8 bis 11, wobei
die Sendeeinheit (702) ferner ausgelegt ist zum Senden einer Erhaltanforderung für Originalmedien einer ausgewählten logischen Darstellungszelle an den MBMS-Client entsprechend einer in der Mediendarstellungsbeschreibungsdatei bereitgestellten Originalmedienbeschreibung von ausgewählten logischen Darstellungszellen;
die Empfangseinheit (701) ferner ausgelegt ist zum Empfangen der vom MBMS-Client gesendeten Originalmedien der ausgewählten logischen Darstellungszelle; und die Darstellungseinheit (703) ferner ausgelegt ist zum Darstellen der von der Empfangseinheit (701) empfangenen Originalmedien der ausgewählten logischen Darstellungszelle;
wobei die Originalmedien unter Verwendung eines Originalmedien-Attributs/Elements beschrieben sind;
wobei das Originalmedien-Attribut/Element der logischen Darstellungszelle die Originalmedien unter Verwendung einer Mediendarstellungsbeschreibung, MPD, beschreibt, wobei die Adresse der Originalmedien erhalten wird.

13. Vorrichtung (700) zur Mosaikdienstdarstellung nach einem der Ansprüche 8 bis 12, wobei der Mosaikdienst unter Verwendung eines Mosaik-Elements/Attributs der Mediendarstellungsbeschreibungsdatei angegeben ist.

14. Vorrichtung (700) zur Mosaikdienstdarstellung nach einem der Ansprüche 8 bis 13, wobei die Mediendarstellungsbeschreibungsdatei mindestens eines der folgenden Attribute/Elemente umfasst:
ein Mengenattribut/-element von logischen Darstellungszellen, verwendet zum Beschreiben einer Menge von logischen Darstellungszellen;
ein Mengenattribut/-element von horizontalen Elementarzellen, verwendet zum Beschreiben einer Menge von horizontalen Elementarzellen;
ein Mengenattribut/-element von vertikalen Elementarzellen, verwendet zum Beschreiben einer Menge von vertikalen Elementarzellen;
ein Attribut/Element von logischen Darstellungszellen, verwendet zum Beschreiben von Information zu einer logischen Darstellungszelle, wobei eine Menge von Attributen/Elementen logischer Darstellungszellen in der Mediendarstellungsbeschreibungsdatei geringer als eine Menge oder gleich einer Menge von logischen Darstellungszellen ist;
ein Kennungsattribut/-element von logischen Darstellungszellen, verwendet zum Beschreiben einer Kennung einer logischen Darstellungszelle;
ein Darstellungsort-Attribut/Element von logischen Darstellungszellen, verwendet zum Beschreiben eines Darstellungsorts einer logischen Darstellungszelle;
ein Darstellungsinformations-Attribut/Element, verwendet zum Beschreiben eines Darstellungstyps einer logischen Darstellungszelle;
ein Mosaikmedien-Link-Attribut/Element, verwendet zum Beschreiben von Mosaikmedien einer logischen Darstellungszelle;
ein Mosaik-Audio-Link-Attribut/Element, verwendet zum Beschreiben von Mosaik-Audio einer logischen Darstellungszelle;
ein Mosaik-Video-Link-Attribut/Element, verwendet zum Beschreiben eines Mosaik-Videos einer logischen Darstellungszelle; oder
ein Originalmedien-Attribut/Element, verwendet zum Beschreiben von Originalmedien einer logischen Darstellungszelle.

## Revendications

1. Procédé de présentation de service en mosaïque implémenté par un client de diffusion en continu adaptative dynamique sur HTTP, DASH, comprenant :
la réception (101) d'un fichier de description de présentation de média qui décrit un service en mosaïque, dans lequel le fichier de description de présentation de média décrit des localisations de présentation de cellules de présentation logiques du service en mosaïque et un média en mosaïque des cellules de présentation logiques ;
l'obtention (102) du média en mosaïque des cellules de présentation logiques à partir d'un client de service de diffusion-multidiffusion média, MBMS, selon une description du média en mosaïque des cellules de présentation logiques fournie dans le fichier de description de présentation de média ; et
la présentation (103) du média en mosaïque à la localisations de présentation des cellules de présentation logiques selon une description de localisation de présentation de cellule de présentation logique fournie dans le fichier de description de présentation de média ;
dans lequel une localisation de présentation d'une cellule de présentation logique du service en mosaïque est décrite en utilisant un attribut/élément de localisation de présentation de cellule de présentation logique dans le fichier de description de présentation de média ;
dans lequel l'attribut/élément de localisation de présentation de cellule de présentation logique décrit la localisation de présentation de la cellule de présentation logique du service en mosaïque en utilisant un numéro d'une cellule élémentaire couverte par la cellule de présentation logique ; et
dans lequel un média en mosaïque de la cellule de présentation logique est décrit en utilisant un attribut/élément de liaison de média en mosaïque dans le fichier de description de présentation de média.

2. Procédé de présentation de service en mosaïque selon la revendication 1, dans lequel l'attribut/élément de liaison de média en mosaïque décrit le média en mosaïque de la cellule de présentation logique en utilisant un identifiant d'un ensemble de médias en mosaïque adaptatifs qui correspond au média en mosaïque.

3. Procédé de présentation de service en mosaïque selon l'une quelconque des revendications 1 à 2, dans lequel le média en mosaïque comprend seulement une vidéo, et le procédé comprend en outre :
l'obtention, à partir du client de MBMS, d'un audio en mosaïque d'une cellule de présentation logique mise en évidence, selon une description d'audio en mosaïque de cellule de présentation logique mise en évidence fournie dans le fichier de description de présentation de média ; et
la lecture de l'audio en mosaïque de la cellule de présentation logique mise en évidence ;
dans lequel l'audio en mosaïque de la cellule de présentation logique mise en évidence est décrit en utilisant un attribut/élément de liaison d'audio en mosaïque dans le fichier de description de présentation de média ;
dans lequel l'attribut/élément d'audio en mosaïque décrit l'audio en mosaïque de la cellule de présentation logique mise en évidence en utilisant un identifiant d'un ensemble d'audios en mosaïque adaptatifs qui correspond à la cellule de présentation logique mise en évidence.

4. Procédé de présentation de service en mosaïque selon la revendication 3, dans lequel il y a au moins deux cellules de présentation logiques, les au moins deux cellules de présentation logiques comprennent une cellule de présentation logique principale, et le procédé comprend en outre :
l'obtention, à partir du client de MBMS, d'un média d'origine de la cellule de présentation logique mise en évidence, selon une description de média d'origine de cellule de présentation logique mise en évidence fournie dans le fichier de description de présentation de média ; et
la présentation du média d'origine de la cellule de présentation logique mise en évidence à une localisation de la cellule de présentation logique principale, selon une description de localisation de cellule de présentation logique principale fournie dans le fichier de description de présentation de média ;
dans lequel la cellule de présentation logique principale est décrite en utilisant un attribut/élément d'informations de présentation ;
dans lequel, lorsqu'une valeur de l'attribut/élément d'informations de présentation est Main_video, ceci indique qu'une cellule de présentation logique correspondante est une cellule de présentation logique principale.

5. Procédé de présentation de service en mosaïque selon l'une quelconque des revendications 1 à 4, dans lequel le procédé comprend en outre :
l'obtention, à partir du client de MBMS, d'un média d'origine d'une cellule de présentation logique sélectionnée, selon une description de média d'origine de cellule de présentation logique sélectionnée fournie dans le fichier de description de présentation de média ; et
la présentation du média d'origine de la cellule de présentation logique ;
dans lequel le média d'origine est décrit en utilisant un attribut/élément de média d'origine ;
dans lequel l'attribut/élément de média d'origine de la cellule de présentation logique décrit le média d'origine en utilisant une adresse d'obtention de description de présentation de média, MPD, du média d'origine.

6. Procédé de présentation de service en mosaïque selon l'une quelconque des revendications 1 à 5, dans lequel le service en mosaïque est spécifié en utilisant un élément/attribut en mosaïque du fichier de description de présentation de média.

7. Procédé de présentation de service en mosaïque selon l'une quelconque des revendications 1 à 6, dans lequel le fichier de description de présentation de média comprend au moins un des éléments/attributs suivants :
un élément/attribut de quantité de cellules de présentation logiques, utilisé pour décrire une quantité de cellules de présentation logiques ;
un élément/attribut de quantité de cellules élémentaires horizontales, utilisé pour décrire une quantité de cellules élémentaires horizontales ;
un élément/attribut de quantité de cellules élémentaires verticales, utilisé pour décrire une quantité de cellules élémentaires verticales ;
un attribut/élément de cellule de présentation logique, utilisé pour décrire des informations concernant une cellule de présentation logique, dans lequel une quantité d'attributs/éléments de cellule de présentation logique dans le fichier de description de présentation de média est inférieure ou égale à une quantité de cellules de présentation logiques ;
un attribut/élément d'identifiant de cellule de présentation logique, utilisé pour décrire un identifiant d'une cellule de présentation logique ;
un attribut/élément de localisation de présentation de cellule de présentation logique, utilisé pour décrire une localisation de présentation d'une cellule de présentation logique ;
un attribut/élément d'informations de présentation, utilisé pour décrire un type de présentation d'une cellule de présentation logique ;
un attribut/élément de liaison de média en mosaïque, utilisé pour décrire un média en mosaïque d'une cellule de présentation logique ;
un attribut/élément de liaison d'audio en mosaïque, utilisé pour décrire un audio en mosaïque d'une cellule de présentation logique ;
un attribut/élément de liaison de vidéo en mosaïque, utilisé pour décrire une vidéo en mosaïque d'une cellule de présentation logique ; ou
un attribut/élément de média d'origine, utilisé pour décrire un média d'origine d'une cellule de présentation logique.

8. Appareil de présentation de service en mosaïque (700), étant un client de diffusion en continu adaptative dynamique sur HTTP, DASH, comprenant :
une unité de réception (701), configurée pour : recevoir un fichier de description de présentation de média qui décrit un service en mosaïque, dans lequel le fichier de description de présentation de média décrit des localisations de présentation de cellules de présentation logiques du service en mosaïque et un média en mosaïque des cellules de présentation logiques, et recevoir le média en mosaïque des cellules de présentation logiques qui est envoyé par un client de service de diffusion-multidiffusion média, MBMS ;
une unité d'envoi (702), configurée pour envoyer une demande d'obtention de média en mosaïque, pour obtenir le média en mosaïque des cellules de présentation logiques, au client de MBMS, selon une description du média en mosaïque des cellules de présentation logiques fournie dans le fichier de description de présentation de média reçu par l'unité de réception (701) ; et
une unité de présentation (703), configurée pour présenter le média en mosaïque à la localisations de présentation des cellules de présentation logiques, selon une description de localisation de présentation de cellule de présentation logique fournie dans le fichier de description de présentation de média reçu par l'unité de réception (701) ;
dans lequel une localisation de présentation d'une cellule de présentation logique du service en mosaïque est décrite en utilisant un fichier de description logique ;
dans lequel l'attribut/élément de localisation de présentation de cellule de présentation logique décrit la localisation de présentation de la cellule de présentation logique du service en mosaïque en utilisant un numéro d'une cellule élémentaire couverte par la cellule de présentation logique ;
dans lequel un média en mosaïque de la cellule de présentation logique est décrite en utilisant un attribut/élément de liaison de média en mosaïque dans le fichier de description de présentation de média.

9. Appareil de présentation de service en mosaïque (700) selon la revendication 8, dans lequel l'attribut/élément de liaison de média en mosaïque décrit le média en mosaïque de la cellule de présentation logique en utilisant un identifiant d'un ensemble de médias en mosaïque adaptatifs qui correspond au média en mosaïque.

10. Appareil de présentation de service en mosaïque (700) selon l'une quelconque des revendications 8 et 9, dans lequel le média en mosaïque reçu par l'unité de réception (701) comprend seulement une vidéo ;
l'unité d'envoi (702) est en outre configurée pour envoyer une demande d'obtention d'audio en mosaïque, pour obtenir un audio en mosaïque d'une cellule de présentation logique mise en évidence, au client de MBMS, selon une description d'audio en mosaïque de cellule de présentation logique mise en évidence fournie dans le fichier de description de présentation de média reçu par l'unité de réception (701) ;
l'unité de réception (701) est en outre configurée pour recevoir l'audio en mosaïque, envoyé par le client de MBMS, de la cellule de présentation logique mise en évidence ; et
l'unité de présentation (703) est en outre configurée pour lire l'audio en mosaïque, reçu par l'unité de réception (701), de la cellule de présentation logique mise en évidence ;
dans lequel l'audio en mosaïque de la cellule de présentation logique mise en évidence est décrit en utilisant un attribut/élément de liaison d'audio en mosaïque dans le fichier de description de présentation de média ;
dans lequel l'attribut/élément d'audio en mosaïque décrit l'audio en mosaïque de la cellule de présentation logique mise en évidence en utilisant un identifiant d'un ensemble d'audios en mosaïque adaptatifs qui correspond à la cellule de présentation logique mise en évidence.

11. Appareil de présentation de service en mosaïque (700) selon la revendication 10, dans lequel il y a au moins deux cellules de présentation logiques, et les au moins deux cellules de présentation logiques comprennent une cellule de présentation logique principale ;
l'unité d'envoi (702) est en outre configurée pour envoyer une demande d'obtention de média d'origine, pour obtenir un média d'origine de la cellule de présentation logique mise en évidence, au client de MBMS, selon une description de média d'origine de cellule de présentation logique mise en évidence fournie dans le fichier de description de présentation de média ;
l'unité de réception (701) est en outre configurée pour recevoir le média d'origine, envoyé par le client de MBMS, de la cellule de présentation logique mise en évidence ; et
l'unité de présentation (703) est en outre configurée pour présenter le média d'origine, reçu par l'unité de réception (701), de la cellule de présentation logique mise en évidence à une localisation de la cellule de présentation logique principale, selon une description de localisation de cellule de présentation logique principale fournie dans le fichier de description de présentation de média ;
dans lequel la cellule de présentation logique principale est décrite en utilisant un attribut/élément d'informations de présentation ;
dans lequel lorsqu'une valeur de l'attribut/élément d'informations de présentation est Main_video, ceci indique qu'une cellule de présentation logique correspondante est une cellule de présentation logique principale.

12. Appareil de présentation de service en mosaïque (700) selon l'une quelconque des revendications 8 à 11, dans lequel
l'unité d'envoi (702) est en outre configurée pour envoyer une demande d'obtention de média d'origine, pour obtenir un média d'origine d'une cellule de présentation logique sélectionnée, au client de MBMS, selon une description de média d'origine de cellule de présentation logique sélectionnée fournie dans le fichier de description de présentation de média ;
l'unité de réception (701) est en outre configurée pour recevoir le média d'origine, envoyé par le client de MBMS, de la cellule de présentation logique sélectionnée ; et l'unité de présentation (703) est en outre configurée pour présenter le média d'origine, reçu par l'unité de réception (701), de la cellule de présentation logique sélectionnée ;
dans lequel le média d'origine est décrit en utilisant un attribut/élément de média d'origine ;
dans lequel l'attribut/élément de média d'origine de la cellule de présentation logique décrit le média d'origine en utilisant une adresse d'obtention de description de présentation de média, MPD, du média d'origine.

13. Appareil de présentation de service en mosaïque (700) selon l'une quelconque des revendications 8 à 12, dans lequel le service en mosaïque est spécifié en utilisant un élément/attribut en mosaïque du fichier de description de présentation de média.

14. Appareil de présentation de service en mosaïque (700) selon l'une quelconque des revendications 8 à 13, dans lequel le fichier de description de présentation de média comprend au moins un des éléments/attributs suivants :
un attribut/élément de quantité de cellules de présentation logiques, utilisé pour décrire une quantité de cellules de présentation logiques ;
un élément/attribut de quantité de cellules élémentaires horizontales, utilisé pour décrire une quantité de cellules élémentaires horizontales ;
un élément/attribut de quantité de cellules élémentaires verticales, utilisé pour décrire une quantité de cellules élémentaires verticales ;
un attribut/élément de cellule de présentation logique, utilisé pour décrire des informations concernant une cellule de présentation logique, dans lequel une quantité d'attributs/éléments de cellule de présentation logique dans le fichier de description de présentation de média est inférieure ou égale à une quantité de cellules de présentation logiques ;
un attribut/élément d'identifiant de cellule de présentation logique, utilisé pour décrire un identifiant d'une cellule de présentation logique ;
un attribut/élément de localisation de présentation de cellule de présentation logique, utilisé pour décrire une localisation de présentation d'une cellule de présentation logique ;
un attribut/élément d'informations de présentation, utilisé pour décrire un type de présentation d'une cellule de présentation logique ;
un attribut/élément de liaison de média en mosaïque, utilisé pour décrire un média en mosaïque d'une cellule de présentation logique ;
un attribut/élément de liaison d'audio en mosaïque, utilisé pour décrire un audio en mosaïque d'une cellule de présentation logique ;
un attribut/élément de liaison de vidéo en mosaïque, utilisé pour décrire une vidéo en mosaïque d'une cellule de présentation logique ; ou
un attribut/élément de média d'origine, utilisé pour décrire un média d'origine d'une cellule de présentation logique.
